# EUROPEAN PATENT APPLICATION

(11) **EP 4 529 118 A1**
(43) Date of publication of application: **26.03.2025**
(21) Application number: 23823105.4
(22) Date of filing: 13.06.2023
(51) Int. Cl.: H04L 41/14

(54) **DATA TRANSMISSION METHOD, COMMUNICATION DEVICE AND COMMUNICATION SYSTEM**

(30) Priority: 15.06.2022 CN 202210672175
(71) Applicant: Huawei Technologies Co., Ltd., Shenzhen, Guangdong 518129 (CN)
(72) Inventor: HUANG, Xietian, Shenzhen, Guangdong 518129 (CN); CAO, Longyu, Shenzhen, Guangdong 518129 (CN)
(74) Representative: Epping - Hermann - Fischer
(86) International application number: PCT/CN2023/099816
(87) International publication number: WO 2023/241537

(57) **Abstract**

This application provides a data transmission method and apparatus. The method includes: A data entity receives correspondence information from a model entity, where the correspondence information indicates a correspondence between an inference model and data description information; the data entity receives, from the model entity, model information corresponding to the inference model; and the data entity sends a first network dataset corresponding to the data description information to the model entity based on the model information and the correspondence information, where the first network dataset is for performing model processing on the inference model. In this way, each time the model entity needs to obtain a network dataset, the model entity can obtain the network dataset by sending the model information corresponding to the inference model to the data entity, to reduce transmission overheads.

## Description

This application claims priority to Chinese Patent Application No. 202210672175.1, filed with the China National Intellectual Property Administration on June 15, 2022 and entitled "DATA TRANSMISSION METHOD, COMMUNICATION APPARATUS, AND COMMUNICATION SYSTEM", which is incorporated herein by reference in its entirety.

### TECHNICAL FIELD

This application relates to the field of communication technologies, and more specifically, to a data transmission method, a communication apparatus, and a communication system.

### BACKGROUND

To improve the intelligence and automation levels of networks, inference models, such as artificial intelligence (artificial intelligence, AI) models and machine learning (machine learning, ML) models, are applied to more technical fields. A model entity configured to process an inference model needs to use network data in a process of obtaining or running the inference model. However, a data entity configured to manage network data usually does not have a capability of parsing the inference model. Therefore, when requesting the network data from the data entity, the model entity needs to provide the data entity with data description information of the network data, for example, a data field for describing the network data. However, field information of the network data usually requires a large quantity of bits, and the network data usually needs to be obtained for a plurality of times in the running process of the inference model, causing high transmission overheads.

### SUMMARY

This application provides a data transmission method and a communication apparatus, to reduce transmission overheads.

According to a first aspect, a data transmission method is provided. The method may be performed by a data entity or a chip in the data entity. The method includes: The data entity receives correspondence information from a model entity, where the correspondence information indicates a correspondence between an inference model and data description information; the data entity receives, from the model entity, model information corresponding to the inference model; and the data entity sends a first network dataset corresponding to the data description information to the model entity based on the model information and the correspondence information, where the first network dataset is for performing model processing on the inference model.

The data entity may store the correspondence information, or the data entity may store the correspondence indicated by the correspondence information.

Based on this technical solution, the data entity receives the correspondence information from the model entity, and learns of, based on the correspondence information, the correspondence between the inference model and the data description information, so that the data entity can obtain, through indexing based on the model information corresponding to the inference model and the correspondence information, the first network dataset corresponding to the data description information. In this way, each time the model entity needs to obtain a network dataset, the model entity can obtain the network dataset by sending the model information corresponding to the inference model to the data entity, to reduce transmission overheads.

Optionally, the correspondence information indicates a correspondence between a plurality of inference models and a plurality of pieces of data description information. Therefore, in some scenarios, for example, when a plurality of inference models have corresponding repeated data description information or have corresponding repeated data fields, the correspondence information can indicate a correspondence between the plurality of inference models and the data description information. This can further reduce transmission overheads.

With reference to the first aspect, in some implementations of the first aspect, the model information includes at least one of the following information: identification information of the inference model and an inference type of the inference model.

Both the identification information and the inference type may be for identifying the inference model.

Based on this technical solution, the data entity can obtain the inference model through indexing based on the model information, and obtain the data description information through indexing based on the correspondence information, and further can return, to the model entity, a network dataset corresponding to the data description information, to reduce transmission overheads.

With reference to the first aspect, in some implementations of the first aspect, the data description information includes at least one data field, and the first network dataset includes network data corresponding to the at least one data field.

The data field may be for describing the network data.

Based on this technical solution, the correspondence information can describe a correspondence between the inference model and the at least one data field. The model entity can obtain, by sending the model information corresponding to the inference model to the data entity, the network data corresponding to the data field, to reduce transmission overheads.

With reference to the first aspect, in some implementations of the first aspect, the method further includes: The data entity obtains a second network dataset based on the model information and the correspondence information; and the data entity performs data processing on the second network dataset, to generate the first network dataset.

Optionally, the data entity receives the second network dataset from a network device based on the model information and the correspondence information; or the data entity obtains the second network dataset from a local storage medium based on the model information and the correspondence information.

It may be understood that the second network dataset may be original data obtained by the data entity.

The data processing may be for making quality of the generated first network dataset higher than that of the second network dataset, and/or the data processing may be for making a data amount of the generated first network dataset less than that of the second network dataset.

Based on this technical solution, the data entity can obtain the second network dataset based on the model information of the inference model and the correspondence information, perform data processing on the second network dataset, and then return the second network dataset to the model entity, so that network data quality can be improved and/or interface overheads can be reduced. With reference to the first aspect, in some implementations of the first aspect, the method includes: The data entity receives data processing method information from the model entity, where the data processing method information indicates at least one data processing method, and the at least one data processing method is for performing data processing on a network dataset. That the data entity performs data processing on the second network dataset includes: The data entity performs data processing on the second network dataset by using one or more of the at least one data processing method.

Based on this technical solution, the data entity can obtain the at least one data processing method from the model entity, and perform, based on the method, data processing on the second network dataset related to the inference model, to generate the first network dataset, thereby improving data reliability.

With reference to the first aspect, in some implementations of the first aspect, the at least one data processing method includes at least one of the following: missing data processing, deduplication processing, filtering processing, combination processing, or quantization processing.

Based on this technical solution, the data entity can use a plurality of data processing manners that can improve data quality and/or reduce a data amount, to improve network data quality and/or reduce interface overheads.

With reference to the first aspect, in some implementations of the first aspect, the method further includes: The data entity receives model processing information from the model entity, where the model processing information indicates that the inference model is for performing at least one of the following model processing: model training, model inference, model evaluation, or model test. That the data entity sends a first network dataset to the model entity based on the model information and the correspondence information includes: The data entity sends the first network dataset to the model entity based on the model information, the correspondence information, and the model processing information.

For a same inference model, data description information corresponding to different model processing may be the same or different. In other words, the first network dataset may be related to the model processing performed by using the inference model.

Based on this technical solution, the model entity may send, to the data entity, the model processing information indicating the model processing performed by using the inference model, so that the data entity can send the first network dataset corresponding to the model processing to the model entity. For example, if the model processing information indicates that the inference model is for model inference, the data entity may return, to the model entity, a network dataset that is for the model inference, thereby reducing transmission overheads of data obtaining in a model inference process.

With reference to the first aspect, in some implementations of the first aspect, the correspondence information further indicates a correspondence between the data description information and the model processing performed by using the inference model.

Based on this technical solution, the correspondence information may be a correspondence between the inference model, the model processing performed by using the inference model, and the data description information, so that the data entity can return a corresponding network dataset to the model entity based on the model information, the model processing information, and the correspondence information, thereby reducing transmission overheads.

With reference to the first aspect, in some implementations of the first aspect, the method further includes: The data entity receives first request information from the model entity, where the first request information requests the data entity to delete information about the correspondence between the inference model and the data description information.

The data entity can delete the information about the correspondence between the inference model and the data description information based on the first request information.

Based on this technical solution, the model entity may request the data entity to delete the information about the correspondence between the inference model and the data description information. For example, in a scenario in which the model entity stops running the inference model, the model entity requests the data entity to delete corresponding information, so that the data entity can save memory of the data entity by deleting the corresponding information.

With reference to the first aspect, in some implementations of the first aspect, the method further includes: The data entity receives second request information from the model entity, where the second request information requests the data entity to delete information about the at least one data processing method.

The data entity can delete the information about the at least one data processing method based on the second request information.

Based on this technical solution, the model entity may request the data entity to delete related information of a data processing method. For example, in a scenario in which the model entity stops running the inference model, the model entity requests the data entity to delete corresponding information, so that the data entity can save memory of the data entity by deleting related information.

According to a second aspect, a data transmission method is provided. The method may be performed by a model entity or a chip in the model entity. The method includes: The model entity generates or obtains correspondence information, where the correspondence information indicates a correspondence between an inference model and data description information; the model entity sends the correspondence information to a data entity; the model entity sends model information corresponding to the inference model to the data entity; and the model entity receives, from the data entity, a first network dataset corresponding to the data description information, where the first network dataset is for performing model processing on the inference model.

Based on this technical solution, the data entity receives the correspondence information from the model entity, and learns of, based on the correspondence information, the correspondence between the inference model and the data description information, so that the data entity can obtain, through indexing based on the model information corresponding to the inference model and the correspondence information, the first network dataset corresponding to the data description information. In this way, each time the model entity needs to obtain a network dataset, the model entity can obtain the network dataset by sending the model information corresponding to the inference model to the data entity, to reduce transmission overheads.

With reference to the second aspect, in some implementations of the second aspect, the model information includes at least one of the following information: identification information of the inference model and an inference type of the inference model.

With reference to the second aspect, in some implementations of the second aspect, the data description information includes at least one data field, and the first network dataset includes network data corresponding to the at least one data field.

With reference to the second aspect, in some implementations of the second aspect, the method further includes: The model entity sends data processing method information to the data entity, where the data processing method information indicates at least one data processing method, and the at least one data processing method is for performing data processing on a network dataset. With reference to the second aspect, in some implementations of the second aspect, a processing manner of the data processing includes at least one of the following manners: missing data processing, deduplication processing, filtering processing, combination processing, or quantization processing.

With reference to the second aspect, in some implementations of the second aspect, the method further includes: The model entity sends model processing information to the data entity, where the model processing information indicates that the inference model is for performing at least one of the following model processing: model training, model inference, model evaluation, or model test.

With reference to the second aspect, in some implementations of the second aspect, the correspondence information further indicates a correspondence between the data description information and the model processing information.

With reference to the second aspect, in some implementations of the second aspect, the method further includes: The model entity sends first request information to the data entity, where the first request information requests the data entity to delete the correspondence information.

With reference to the second aspect, in some implementations of the second aspect, the method further includes: The model entity sends second request information to the data entity, where the second request information requests to delete the model processing information.

The implementations of the second aspect are methods of the model entity corresponding to the implementations of the first aspect. For beneficial technical effects of the implementations of the second aspect, refer to the descriptions of related implementations of the first aspect. Details are not described herein again.

According to a third aspect, a data transmission method is provided. The method may be performed by a data entity or a chip in the data entity and a model entity or a chip in the model entity. The method includes: The model entity generates or obtains correspondence information, where the correspondence information indicates a correspondence between an inference model and data description information; the model entity sends the correspondence information to the data entity; the model entity sends model information corresponding to the inference model to the data entity; and the data entity sends a first network dataset corresponding to the data description information to the model entity based on the model information and the correspondence information, where the first network dataset is for performing model processing on the inference model.

Based on this technical solution, the data entity receives the correspondence information from the model entity, and learns of, based on the correspondence information, the correspondence between the inference model and the data description information, so that the data entity can obtain, through indexing based on the model information corresponding to the inference model and the correspondence information, the first network dataset corresponding to the data description information. In this way, each time the model entity needs to obtain a network dataset, the model entity can obtain the network dataset by sending the model information corresponding to the inference model to the data entity, to reduce transmission overheads.

With reference to the third aspect, in some implementations of the third aspect, the model information includes at least one of the following information: identification information of the inference model and an inference type of the inference model.

With reference to the third aspect, in some implementations of the third aspect, the data description information includes at least one data field, and the first network dataset includes network data corresponding to the at least one data field.

With reference to the third aspect, in some implementations of the third aspect, the method further includes: The data entity obtains a second network dataset based on the model information and the correspondence information; and the data entity performs data processing on the second network dataset, to generate the first network dataset.

With reference to the third aspect, in some implementations of the third aspect, the method further includes: The model entity sends data processing method information to the data entity, where the data processing method information indicates at least one data processing method, and the at least one data processing method is for performing data processing on a network dataset. That the data entity performs data processing on the second network dataset, to generate the first network dataset includes: The data entity performs data processing on the second network dataset by using one or more of the at least one data processing method.

With reference to the third aspect, in some implementations of the third aspect, the at least one data processing method includes at least one of the following: missing data processing, deduplication processing, filtering processing, combination processing, or quantization processing. With reference to the third aspect, in some implementations of the third aspect, the method further includes: The model entity sends model processing information to the data entity, where the inference model is for performing at least one of the following model processing: model training, model inference, model evaluation, or model test. That the data entity sends a first network dataset to the model entity based on the model information and the correspondence information includes: The data entity sends the first network dataset to the model entity based on the model information, the correspondence information, and the model processing information.

With reference to the third aspect, in some implementations of the third aspect, the correspondence information further indicates a correspondence between the data description information and the model processing performed by using the inference model.

With reference to the third aspect, in some implementations of the third aspect, the method further includes: The model entity sends first request information to the data entity, where the first request information requests the data entity to delete information about the correspondence between the inference model and the data description information.

With reference to the third aspect, in some implementations of the third aspect, the method further includes: The model entity sends second request information to the data entity, where the second request information requests to the data entity to delete information about the at least one data processing method.

The implementations of the third aspect are methods of a system, including the model entity and the data entity, corresponding to the implementations of the first aspect. For beneficial technical effects of the implementations of the third aspect, refer to the descriptions of related implementations of the first aspect. Details are not described herein again.

According to a fourth aspect, a data transmission method is provided. The method may be performed by a data entity or a chip in the data entity. The method includes: The data entity receives data processing method information from a model entity, where the data processing method information indicates at least one data processing method, and the at least one data processing method is for performing data processing on network data; the data entity receives data query information from the model entity, where the data query information requests a network dataset corresponding to an inference model; the data entity obtains a second network dataset based on the data query information, and performs data processing on the second network dataset based on the data processing method information, to generate a first network dataset; and the data entity sends the first network dataset to the model entity.

Optionally, the data entity obtains the second network dataset from a network device based on the data query information; or the data entity obtains the second network dataset from a local storage medium based on the data query information.

It may be understood that the second network dataset may be original data obtained by the data entity.

The data processing may be for making quality of the generated first network dataset higher than that of the second network dataset, and/or the data processing may be for making a data amount of the generated first network dataset less than that of the second network dataset.

Based on this technical solution, the data entity can obtain the second network dataset based on the data query information, perform data processing on the second network dataset, and then return the second network dataset to the model entity, so that network data quality can be improved and/or interface overheads can be reduced.

With reference to the fourth aspect, in some implementations of the fourth aspect, the at least one data processing method includes at least one of the following: missing data processing, deduplication processing, filtering processing, combination processing, or quantization processing. Based on this technical solution, the data entity can use a plurality of data processing manners that can improve data quality and/or reduce a data amount, to improve network data quality and/or reduce interface overheads.

With reference to the fourth aspect, in some implementations of the fourth aspect, data description information includes at least one data field, and the first network dataset includes network data corresponding to the at least one data field.

Based on this technical solution, the model entity can obtain, by sending model information corresponding to the inference model to the data entity, the network data corresponding to the data field, to reduce transmission overheads.

With reference to the fourth aspect, in some implementations of the fourth aspect, the data entity receives correspondence information from the model entity, where the correspondence information indicates a correspondence between the inference model and data description information, and the data query information includes model information corresponding to the inference model. That the data entity obtains a second network dataset based on the data query information includes: The data entity obtains the second network dataset based on the model information and the correspondence information.

The data description information may include at least one data field for describing network data. The first network dataset may include network data corresponding to the at least one data field. The correspondence information can describe a correspondence between the inference model and the at least one data field.

The data entity may store the correspondence information, or the data entity may store the correspondence indicated by the correspondence information.

Based on this technical solution, the data entity receives the correspondence information from the model entity, and learns of, based on the correspondence information, the correspondence between the inference model and the data description information, so that the data entity can obtain, through indexing based on the model information corresponding to the inference model and the correspondence information, a network dataset corresponding to the data description information. In this way, each time the model entity needs to obtain a network dataset, the model entity can obtain the network dataset by sending the model information corresponding to the inference model to the data entity, to reduce transmission overheads.

With reference to the fourth aspect, in some implementations of the fourth aspect, the model information includes at least one of the following information: identification information of the inference model and an inference type of the inference model.

Both the identification information and the inference type may be for identifying the inference model.

Based on this technical solution, the data entity can obtain the inference model through indexing based on the model information, and obtain the data description information through indexing based on the correspondence information, and further can return, to the model entity, a network dataset corresponding to the data description information, to reduce transmission overheads. With reference to the fourth aspect, in some implementations of the fourth aspect, the data entity receives model processing information from the model entity, where the model processing information indicates that the inference model is for performing at least one of the following model processing: model training, model inference, model evaluation, or model test. That the data entity obtains the second network dataset based on the model information and the correspondence information includes: The data entity obtains the second network dataset based on the model information, the correspondence information, and the model processing information.

For a same inference model, data description information corresponding to different model processing may be the same or different. In other words, the first network dataset may be related to the model processing performed by using the inference model.

Based on this technical solution, the model entity may send, to the data entity, the model processing information indicating the model processing performed by using the inference model, so that the data entity can send the first network dataset corresponding to the model processing to the model entity. For example, if the model processing information indicates that the inference model is for model inference, the data entity may return, to the model entity, a network dataset that is for the model inference, thereby further reducing transmission overheads.

With reference to the fourth aspect, in some implementations of the fourth aspect, the correspondence information further indicates a correspondence between the data description information and the model processing performed by using the inference model.

Based on this technical solution, the correspondence information may be a correspondence between the inference model, the model processing performed by using the inference model, and the data description information, so that the data entity can return a corresponding network dataset to the model entity based on the model information, the model processing information, and the correspondence information, thereby reducing transmission overheads.

With reference to the fourth aspect, in some implementations of the fourth aspect, the method further includes: The data entity receives first request information from the model entity, where the first request information requests the data entity to delete information about the correspondence between the inference model and the data description information.

The data entity can delete the information about the correspondence between the inference model and the data description information based on the first request information.

Based on this technical solution, the model entity may request the data entity to delete the information about the correspondence between the inference model and the data description information. For example, in a scenario in which the model entity stops running the inference model, the model entity requests the data entity to delete corresponding information, so that the data entity can save memory of the data entity by deleting the corresponding information.

With reference to the fourth aspect, in some implementations of the fourth aspect, the method further includes: The data entity receives second request information from the model entity, where the second request information requests the data entity to delete information about the at least one data processing method.

The data entity can delete the information about the at least one data processing method based on the second request information.

Based on this technical solution, the model entity may request the data entity to delete related information of a data processing method. For example, in a scenario in which the model entity stops running the inference model, the model entity requests the data entity to delete corresponding information, so that the data entity can save memory of the data entity by deleting related information.

According to a fifth aspect, a data transmission method is provided. The method may be performed by a model entity or a chip in the model entity. The method includes: The model entity generates or obtains data processing method information, where the data processing method information indicates at least one data processing method, and the at least one data processing method is for performing data processing on a network dataset; the model entity sends the data processing method information to a data entity; the model entity sends data query information to the data entity, where the data query information is for requesting a network dataset corresponding to an inference model; and the model entity receives a first network dataset from the data entity in response to the data query information, where the first network dataset is generated based on the at least one data processing method.

Based on this technical solution, the data entity can obtain a second network dataset based on model information of the inference model and correspondence information, perform data processing on the second network dataset, and then return the second network dataset to the model entity, so that network data quality can be improved and/or interface overheads can be reduced. With reference to the fifth aspect, in some implementations of the fifth aspect, the at least one data processing method includes at least one of the following: missing data processing, deduplication processing, filtering processing, combination processing, or quantization processing.

With reference to the fifth aspect, in some implementations of the fifth aspect, data description information includes at least one data field, and the first network dataset includes network data corresponding to the at least one data field.

With reference to the fifth aspect, in some implementations of the fifth aspect, the model entity sends correspondence information to the data entity, where the correspondence information indicates a correspondence between the inference model and data description information, and the data query information includes model information corresponding to the inference model.

With reference to the fifth aspect, in some implementations of the fifth aspect, the model information includes at least one of the following information: identification information of the inference model and an inference type of the inference model.

With reference to the fifth aspect, in some implementations of the fifth aspect, the data query information includes model processing information, where the model processing information indicates that the inference model is for performing at least one of the following model processing: model training, model inference, model evaluation, or model test.

With reference to the fifth aspect, in some implementations of the fifth aspect, the correspondence information further indicates a correspondence between the data description information and the model processing performed by using the inference model.

With reference to the fifth aspect, in some implementations of the fifth aspect, the model entity sends first request information to the data entity, where the first request information requests to delete information about the correspondence between the inference model and the data description information.

With reference to the fifth aspect, in some implementations of the fifth aspect, the model entity sends second request information to the data entity, where the second request information requests to delete information about the at least one data processing method.

The implementations of the fifth aspect are methods of the model entity corresponding to the implementations of the fourth aspect. For beneficial technical effects of the implementations of the fifth aspect, refer to the descriptions of related implementations of the fourth aspect. Details are not described herein again.

According to a sixth aspect, a data transmission method is provided. The method may be performed by a data entity or a chip in the data entity and a model entity or a chip in the model entity. The method includes: The model entity sends data processing method information to the data entity, where the data processing method information indicates at least one data processing method, and the at least one data processing method is for performing data processing on a network dataset; the model entity sends data query information to the data entity, where the data query information requests a network dataset corresponding to an inference model; the data entity obtains a second network dataset based on the data query information, and performs data processing on the second network dataset based on the data processing method information, to generate a first network dataset; and the data entity sends the first network dataset to the model entity.

Based on this technical solution, the data entity can obtain the second network dataset based on the model information of the inference model and the correspondence information, perform data processing on the second network dataset, and then return the second network dataset to the model entity, so that network data quality can be improved and/or interface overheads can be reduced. With reference to the sixth aspect, in some implementations of the sixth aspect, the at least one data processing method includes at least one of the following: missing data processing, deduplication processing, filtering processing, combination processing, or quantization processing. With reference to the sixth aspect, in some implementations of the sixth aspect, data description information includes at least one data field, and the first network dataset includes network data corresponding to the at least one data field.

With reference to the sixth aspect, in some implementations of the sixth aspect, the model entity sends correspondence information to the data entity, where the correspondence information indicates a correspondence between the inference model and data description information, and the data query information includes model information corresponding to the inference model.

With reference to the sixth aspect, in some implementations of the sixth aspect, the model information includes at least one of the following information: identification information of the inference model and an inference type of the inference model.

With reference to the sixth aspect, in some implementations of the sixth aspect, the data query information includes model processing information, where the model processing information indicates that the inference model is for performing at least one of the following model processing: model training, model inference, model evaluation, or model test.

With reference to the sixth aspect, in some implementations of the sixth aspect, the correspondence information further indicates a correspondence between the data description information and the model processing performed by using the inference model.

With reference to the sixth aspect, in some implementations of the sixth aspect, the model entity sends first request information to the data entity, where the first request information requests to delete information about the correspondence between the inference model and the data description information.

With reference to the sixth aspect, in some implementations of the sixth aspect, the model entity sends second request information to the data entity, where the second request information requests to delete information about the at least one data processing method.

The implementations of the sixth aspect are methods of a system, including the model entity and the data entity, corresponding to the implementations of the fourth aspect. For beneficial technical effects of the implementations of the sixth aspect, refer to the descriptions of related implementations of the fourth aspect. Details are not described herein again.

According to a seventh aspect, a data transmission apparatus is provided. The apparatus includes a transceiver module and a processing module. The transceiver module is configured to receive correspondence information from a model entity, where the correspondence information indicates a correspondence between an inference model and data description information. The transceiver module is further configured to receive, from the model entity, model information corresponding to the inference model. The processing module is configured to send a first network dataset corresponding to the data description information to the model entity based on the model information and the correspondence information, where the first network dataset is for performing model processing on the inference model.

Based on this technical solution, the data entity receives the correspondence information from the model entity, and learns of, based on the correspondence information, the correspondence between the inference model and the data description information, so that the data entity can obtain, through indexing based on the model information corresponding to the inference model and the correspondence information, the first network dataset corresponding to the data description information. In this way, each time the model entity needs to obtain a network dataset, the model entity can obtain the network dataset by sending the model information corresponding to the inference model to the data entity, to reduce transmission overheads.

With reference to the seventh aspect, in some implementations of the seventh aspect, a model information includes at least one of the following information: identification information of the inference model and an inference type of the inference model.

With reference to the seventh aspect, in some implementations of the seventh aspect, the data description information includes at least one data field, and the first network dataset includes network data corresponding to the at least one data field.

With reference to the seventh aspect, in some implementations of the seventh aspect, the processing module is further configured to obtain a second network dataset based on the model information and the correspondence information. The processing module is further configured to perform data processing on the second network dataset, to generate the first network dataset. With reference to the seventh aspect, in some implementations of the seventh aspect, the transceiver module is further configured to receive data processing method information from the model entity, where the data processing method information indicates at least one data processing method, and the at least one data processing method is for performing data processing on a network dataset. The processing module is configured to perform data processing on the second network dataset by using one or more of the at least one data processing method.

With reference to the seventh aspect, in some implementations of the seventh aspect, the at least one data processing method includes at least one of the following: missing data processing, deduplication processing, filtering processing, combination processing, or quantization processing. With reference to the seventh aspect, in some implementations of the seventh aspect, the transceiver module is further configured to receive model processing information from the model entity, where the model processing information indicates that the inference model is for performing at least one of the following model processing: model training, model inference, model evaluation, or model test. The processing module is specifically configured to send the first network dataset to the model entity based on the model information, the correspondence information, and the model processing information.

With reference to the seventh aspect, in some implementations of the seventh aspect, the correspondence information further indicates a correspondence between the data description information and the model processing performed by using the inference model.

With reference to the seventh aspect, in some implementations of the seventh aspect, the transceiver module is further configured to receive first request information from the model entity, where the first request information requests the data entity to delete information about the correspondence between the inference model and the data description information.

With reference to the seventh aspect, in some implementations of the seventh aspect, the transceiver module is further configured to receive second request information from the model entity, where the second request information requests the data entity to delete information about the at least one data processing method.

The implementations of the seventh aspect are apparatuses of the data entity corresponding to the implementations of the first aspect. For beneficial technical effects of the implementations of the seventh aspect, refer to the descriptions of related implementations of the first aspect. Details are not described herein again.

According to an eighth aspect, a data transmission apparatus is provided. The apparatus includes a transceiver module and a processing module. The processing module is configured to generate or obtain correspondence information, where the correspondence information indicates a correspondence between an inference model and data description information. The transceiver module is configured to send the correspondence information to a data entity. The transceiver module is further configured to send model information corresponding to the inference model to the data entity. The transceiver module is further configured to receive, from the data entity, a first network dataset corresponding to the data description information, where the first network dataset is for performing model processing on the inference model.

Based on this technical solution, the data entity receives the correspondence information from the model entity, and learns of, based on the correspondence information, the correspondence between the inference model and the data description information, so that the data entity can obtain, through indexing based on the model information corresponding to the inference model and the correspondence information, the first network dataset corresponding to the data description information. In this way, each time the model entity needs to obtain a network dataset, the model entity can obtain the network dataset by sending the model information corresponding to the inference model to the data entity, to reduce transmission overheads.

With reference to the eighth aspect, in some implementations of the eighth aspect, a model information includes at least one of the following information: identification information of the inference model and an inference type of the inference model.

With reference to the eighth aspect, in some implementations of the eighth aspect, the transceiver module is further configured to send data processing method information to the data entity, where the data processing method information indicates at least one data processing method, and the at least one data processing method is for performing data processing on a network dataset.

With reference to the eighth aspect, in some implementations of the eighth aspect, the at least one data processing method includes at least one of the following: missing data processing, deduplication processing, filtering processing, combination processing, or quantization processing. With reference to the eighth aspect, in some implementations of the eighth aspect, the transceiver module is further configured to send model processing information to the data entity, where the model processing information indicates that the inference model is for performing at least one of the following model processing: model training, model inference, model evaluation, or model test. With reference to the eighth aspect, in some implementations of the eighth aspect, the correspondence information further indicates a correspondence between the data description information and the model processing information.

With reference to the eighth aspect, in some implementations of the eighth aspect, the transceiver module is further configured to send first request information to the data entity, where the first request information requests the data entity to delete information about the correspondence between the inference model and the data description information.

With reference to the eighth aspect, in some implementations of the eighth aspect, the transceiver module is further configured to send second request information to the data entity, where the second request information requests to delete information about the at least one data processing method.

The implementations of the eighth aspect are apparatuses of the model entity corresponding to the implementations of the second aspect. For beneficial technical effects of the implementations of the eighth aspect, refer to the descriptions of related implementations of the second aspect. Details are not described herein again.

According to a ninth aspect, a data transmission apparatus is provided. The apparatus has a function of implementing the method in any one of the fourth aspect or the possible implementations of the fourth aspect. The function may be implemented by hardware, or may be implemented by hardware executing corresponding software. The hardware or the software includes one or more units corresponding to the foregoing function.

According to a tenth aspect, a data transmission apparatus is provided. The apparatus has a function of implementing the method in any one of the fifth aspect or the possible implementations of the fifth aspect. The function may be implemented by hardware, or may be implemented by hardware executing corresponding software. The hardware or the software includes one or more units corresponding to the foregoing function.

According to an eleventh aspect, a communication apparatus is provided. The apparatus may include a processing module, a sending unit, and a receiving unit. Optionally, the sending unit and the receiving unit may alternatively be a transceiver module.

When the apparatus is a data entity, the processing module may be a processor, and the sending unit and the receiving unit may be a transceiver. The apparatus may further include a storage unit, and the storage unit may be a memory. The storage unit is configured to store instructions, and the processing module executes the instructions stored in the storage unit, so that the data entity performs any method in the first aspect or the fourth aspect. When the apparatus is a chip in a data entity, the processing module may be a processor, and the sending unit and the receiving unit may be an input/output interface, a pin, a circuit, or the like. The processing module executes instructions stored in a storage unit, so that the chip performs any method in the first aspect or the fourth aspect. The storage unit is configured to store the instructions. The storage unit may be a storage unit (for example, a register or a cache) in the chip, or may be a storage unit (for example, a read-only memory or a random access memory) that is in the data entity and that is located outside the chip.

When the apparatus is a model entity, the processing module may be a processor, and the sending unit and the receiving unit may be a transceiver. The apparatus may further include a storage unit, and the storage unit may be a memory. The storage unit is configured to store instructions, and the processing module executes the instructions stored in the storage unit, so that the model entity performs any method in the second aspect or the fifth aspect. When the apparatus is a chip in a model entity, the processing module may be a processor, and the sending unit and the receiving unit may be an input/output interface, a pin, a circuit, or the like. The processing module executes instructions stored in a storage unit, so that the chip performs any method in the second aspect or the fifth aspect. The storage unit is configured to store the instructions. The storage unit may be a storage unit (for example, a register or a cache) in the chip, or may be a storage unit (for example, a read-only memory or a random access memory) that is in the model entity and that is located outside the chip.

According to a twelfth aspect, a communication apparatus is provided. The apparatus includes a processor and an interface circuit. The interface circuit is configured to: receive a signal from another communication apparatus other than the communication apparatus and transmit the signal to the processor, or send a signal from the processor to another communication apparatus other than the communication apparatus. The processor is configured to implement any method in the first aspect to the sixth aspect by using a logic circuit or executing code instructions.

According to a thirteenth aspect, a computer-readable storage medium is provided. The computer-readable storage medium stores a computer program or instructions. When the computer program or the instructions are executed, any method in the first aspect to the sixth aspect is implemented. According to a fourteenth aspect, a computer program product including instructions is provided. When the instructions are run, any method in the first aspect to the sixth aspect is implemented. According to a fifteenth aspect, a computer program is provided. The computer program includes code or instructions. When the code or the instructions are run, any method in the first aspect to the sixth aspect is implemented.

According to a sixteenth aspect, a chip system is provided. The chip system includes a processor, and may further include a memory, configured to implement any method in the first aspect to the sixth aspect. The chip system may include a chip, or may include a chip and another discrete component.

According to a seventeenth aspect, a communication system is provided. The system includes the apparatus according to either the seventh aspect or the eighth aspect, or the system includes the apparatus according to either the ninth aspect or the tenth aspect.

### BRIEF DESCRIPTION OF DRAWINGS

FIG. 1 is a schematic of a data transmission system applicable to an embodiment of this application;
FIG. 2 is a schematic flowchart of a data transmission method according to an embodiment of this application;
FIG. 3 is a schematic flowchart of an example of a data transmission method in a model training process according to an embodiment of this application;
FIG. 4 is a schematic flowchart of a possible implementation of determining model training according to an embodiment of this application;
FIG. 5 is a schematic flowchart of another example of a data transmission method in a model training process according to an embodiment of this application;
FIG. 6 is a schematic flowchart of an example of a data transmission method in a model inference process according to an embodiment of this application;
FIG. 7 is a schematic flowchart of an example of a data transmission method in a model evaluation process according to an embodiment of this application;
FIG. 8 is a schematic flowchart of an example of a data transmission method in a model test process according to an embodiment of this application;
FIG. 9 is a schematic flowchart of another data transmission method according to an embodiment of this application; and
FIG. 10 and FIG. 11 are schematics of structures of possible communication apparatuses according to embodiments of this application.

### DESCRIPTION OF EMBODIMENTS

The following describes technical solutions of this application with reference to accompanying drawings.

The method in embodiments of this application may be applied to a long term evolution (long term evolution, LTE) system, a long term evolution-advanced (long term evolution-advanced, LTE-A) system, an enhanced long term evolution (enhanced long term evolution, eLTE) system, and a 5th generation (the 5th Generation, 5G) new radio (New Radio, NR) system, or may be extended to a similar wireless communication system, such as wireless fidelity (wireless-fidelity, Wi-Fi), worldwide interoperability for microwave access (worldwide interoperability for microwave access, WIMAX), and a 3rd generation partnership project (3rd generation partnership project, 3gpp)-related cellular system.

For clarity, the following explains some terms in embodiments of this application.

An inference model (also referred to as a model for short) is a function that is learned from data and that can implement a specific function/mapping. The model may be obtained based on an artificial intelligence (artificial intelligence, AI) or machine learning (machine learning, ML) technology. Therefore, the model may also be referred to as an artificial intelligence/AI model, a machine learning/ML model, or the like. Common algorithms for generating the AI/ML model include supervised learning, unsupervised learning, and enhanced learning. Corresponding models may be referred to as a supervised learning model, an unsupervised learning model, or an enhanced learning model. For example, the supervised learning model may be a classification model, a prediction model, a regression model, or the like, and the unsupervised learning model may be a clustering model. In addition, the model may also be obtained based on a neural network (neural network, NN) technology. This model may also be referred to as a neural network model, a deep learning model, or the like.

An inference type (inference type) is for describing a type of inference performed by using an inference model. For example, the inference type may be coverage problem analysis, fault prediction, energy saving analysis, mobility performance analysis, service experience analysis, or cell traffic prediction.

Model training: Training data is used to obtain an available model through training.

Model inference: Inference or prediction is performed based on models to generate inference results. In addition, a model inference entity may be for model inference.

Model evaluation: Whether performance of a model running in a model inference entity meets a requirement is evaluated.

Model management: A model is managed in a life cycle. For example, model evaluation, model training, model inference, and the like are managed.

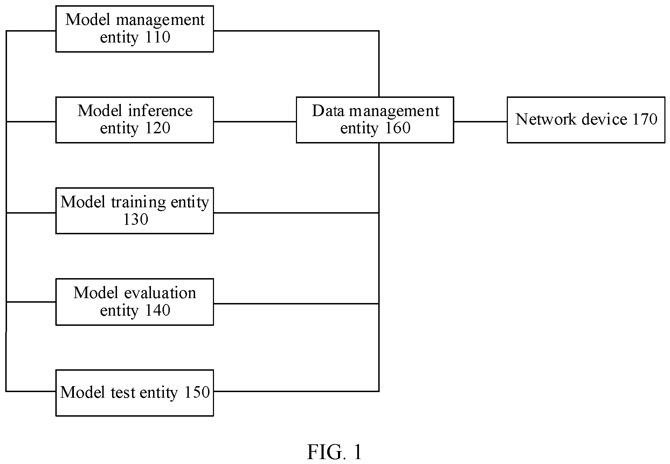

For ease of understanding of embodiments of this application, an application scenario of embodiments of this application is first described in detail with reference to FIG. 1.

FIG. 1 is a schematic of a structure of a communication system applicable to an embodiment of this application. An apparatus that may be in the communication system is first described.
1. A model management entity 110 is configured to manage a model in a life cycle.
   When the model is applied to a network operations and maintenance domain, the model management entity 110 may be deployed in a network management system (network management system, NMS). When the model is applied to a radio access network (radio access network, RAN) domain or a core network domain, the model management entity 110 may be deployed in an NMS or an element management system (element management system, EMS). The NMS is for network operation, management, and maintenance, and may also be referred to as a cross-domain management system. The EMS is configured to manage one or more network elements of a specific type, and may also be referred to as a domain management system or a single-domain management system.
2. A model inference entity 120 is configured to perform inference, prediction, or operation based on a model, and generate an inference result. The model inference entity may be used as a consumer of a model training service.
   When the model is applied to the network operations and maintenance domain, the model inference entity 120 may be deployed in the EMS. For example, the model inference entity 120 may be deployed in a management data analytics function (management data analytics function, MDAF) in the EMS, so that an inference result generated by the model inference entity 120 may assist the MDAF in performing management data analytics. When the model is applied to the RAN domain, the model inference entity 120 may be deployed in a RAN device. When the model runs in the core network domain, the model inference entity 120 may be deployed in a core network element, for example, a network data analytics function (network data analytics function, NWDAF) network element.
3. A model training entity 130 is configured to obtain an available model through training. The model training entity 130 may serve as a model training service producer.
   When the model is applied to the network operations and maintenance domain or the RAN domain, the model training entity 130 may be deployed in the EMS. For example, the model training entity 130 may be deployed in the MDAF network element in the EMS, or the model training entity 130 may serve as an independent functional network element in the EMS. When the model runs in the core network domain, the model training entity 130 may be deployed in the EMS, or the model training entity 130 may be deployed in a core network element, for example, the NWDAF network element.
4. A model evaluation entity 140 is configured to evaluate performance of an inference model. When the model is applied to the network operations and maintenance domain, the model evaluation entity 140 may be deployed in the EMS. For example, the model evaluation entity 140 may be deployed in the MDAF network element in the EMS, or the model evaluation entity 140 may serve as an independent functional network element in the EMS. When the model is applied to the RAN domain, the model evaluation entity 140 may be deployed in the EMS, or the model evaluation entity 140 may be deployed in the RAN device. When the model runs in the core network domain, the model evaluation entity 140 may be deployed in the EMS, or the model evaluation entity 140 may be deployed in a core network element, for example, the NWDAF network element.
5. A model test entity 150 is configured to test performance of an inference model.
   When the model is applied to the network operations and maintenance domain, the model test entity 150 may be deployed in the EMS. For example, the model test entity 150 may be deployed in the MDAF network element in the EMS, or the model test entity 150 may serve as an independent functional network element in the EMS. When the model is applied to the RAN domain, the model test entity 150 may be deployed in the EMS, or the model test entity 150 may be deployed in the RAN device. When the model runs in the core network domain, the model test entity 150 may be deployed in the EMS, or the model test entity 150 may be deployed in a core network element, for example, the NWDAF network element. In a possible implementation, the model test entity 150 may be deployed together with the model inference entity 120, or the model test entity 150 may be a functional entity in the model inference entity 120.
6. A data management entity 160 is configured to collect and manage network data, and provide a data query service.
   When a model is applied to the network operations and maintenance domain, the data management entity 160 may be deployed in the EMS. For example, the data management entity 160 may be deployed in the MDAF network element in the EMS, or the data management entity 160 may serve as an independent functional network element in the EMS. When the model runs in the RAN domain, the data management entity 160 may be deployed in the EMS, or the data management entity 160 may be deployed in the RAN device. When the model runs in the core network domain, the data management entity 160 may be deployed in the EMS, or the data management entity 160 may be deployed in a core network element, for example, a data collection coordination function (data collection coordination function, DCCF) network element. In some possible implementations, the data management entity 160 may alternatively be a management data producer (management data producer).
7. A network device 170 is configured to provide network data.
   The network device 170 may be an entity in the RAN, the core network element, or the EMS. The network device 170 may measure or calculate network running status data, record related network data, for example, reference signal received power (reference signal received power, RSRP) and reference signal received quality (reference signal received quality, RSRQ), and provide the network data to the data management entity 160 for management or storage. Alternatively, the data management entity 160 may detect or record the related network data of the network device 170, for example, a service area identifier or a cell identifier.

It should be noted that the solutions of this application may be applied to another system including a corresponding entity. This is not limited in this application. It may be understood that the foregoing entity or function may be a network element in a hardware device, may be a software function running on dedicated hardware, or may be a virtualization function instantiated on a platform (for example, a cloud platform). Optionally, the foregoing entity or function may be implemented by one device, or jointly implemented by a plurality of devices, or may be a functional module in one device. This is not specifically limited in embodiments of this application. For example, in embodiments of this application, the model management entity 110 and the model training entity 130 may be different functional models in a device.

The data management entity may manage the network data. However, the data management entity does not have a capability of analyzing an inference model. When the model entity, for example, the model inference entity, the model training entity, the model management entity, or the model evaluation entity shown in FIG. 1, requests network data from the data management entity, high transmission overheads need to be occupied to provide description information of the network data to the data management entity. This application provides a data transmission method and a communication apparatus, to reduce transmission overheads. The following first describes the data transmission method.

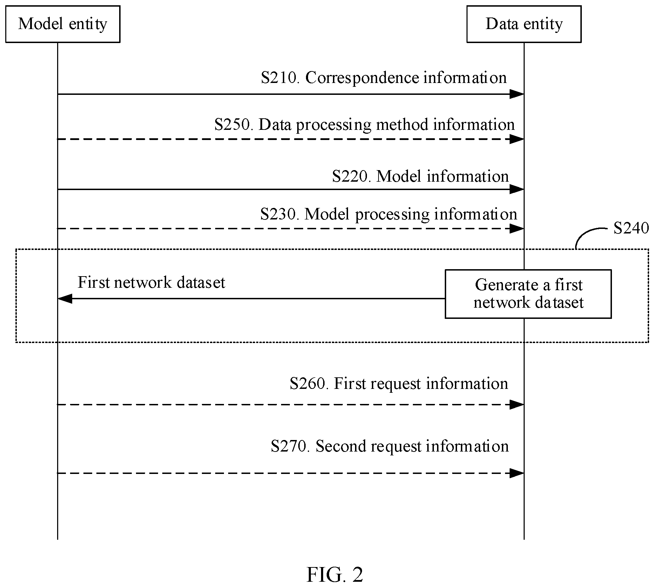

FIG. 2 is a schematic flowchart of a data transmission method 200 according to an embodiment of this application.

S210. A model entity sends correspondence information to a data entity. Correspondingly, the data entity receives the correspondence information from the model entity.

The correspondence information indicates a correspondence between an inference model and data description information.

A function implemented by the model entity may be implemented by one or more of the model inference entity, the model training entity, the model management entity, or the model evaluation entity shown in FIG. 1, and a function implemented by the data entity may be implemented by the data management entity shown in FIG. 1.

The correspondence information may include a mapping relationship between identification information of the inference model and the data description information, or the correspondence information may include a mapping relationship between an inference type of the inference model and the data description information. The identification information of the inference model and the inference type of the inference model may be information generated or obtained by the model entity for identifying the inference model, and the data description information may include at least one data field for describing network data.

For example, an inference model for predicting quality of experience (quality of experience, QoE) perceived by customers is used as an example. An inference type of the inference model is a QoE prediction model, and data description information corresponding to the inference model may include at least one of the following data fields: a serving cell identifier, a user uplink physical resource block (physical resource block, PRB) utilization rate, a user downlink PRB utilization rate, a user uplink packet data convergence protocol (packet data convergence protocol, PDCP) byte quantity, a user downlink PDCP byte quantity, a cell identifier, an average uplink PRB utilization rate, an average downlink PRB utilization rate, an average uplink PDCP byte quantity, an average downlink PDCP byte quantity, reference signal received power (reference signal received power, RSRP), reference signal received quality (reference signal received quality, RSRQ), and a signal to interference plus noise ratio (signal to interference plus noise ratio, SINR). In this case, the correspondence information may be a mapping relationship between an identifier of the inference model and the data fields, or the correspondence information may be a mapping relationship between the inference type of the inference model and the data fields.

It may be understood that the identification information or the inference type of the inference model is for establishing indexing of the inference model and a data field list. A specific form may be related to a manner in which the model entity generates or obtains the correspondence information. For example, the model entity may obtain the correspondence information from a model file of the inference model, or the model entity may generate a data field corresponding to the inference model in a running process, to generate the correspondence information. This is not particularly limited in this application.

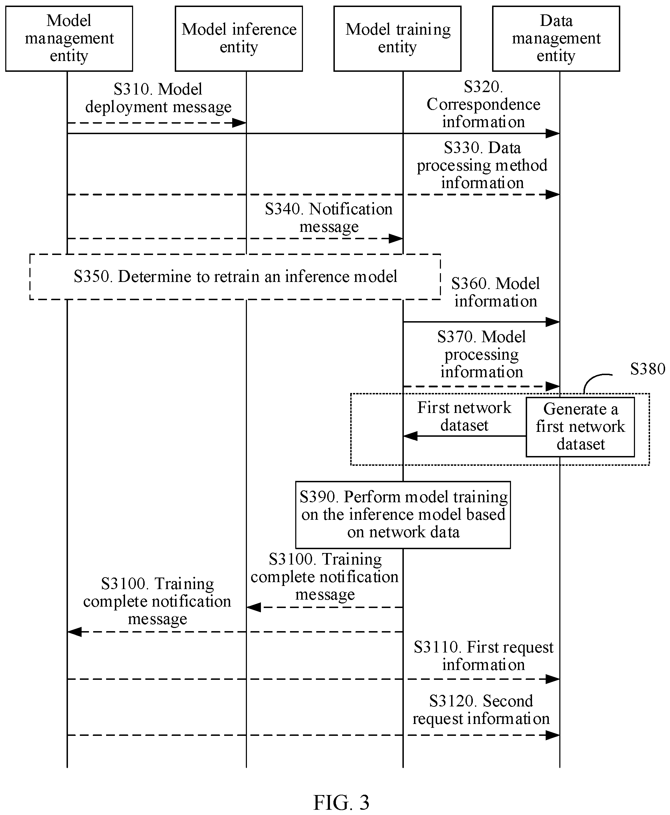

It should be noted that a manner in which the model entity sends the correspondence information to the data entity may be related to a specific application scenario. For example, the model entity may send the correspondence information during model deployment, the model entity may send the correspondence information when retraining the inference model, or the model entity may send the correspondence information when querying the network data for the first time. The correspondence information may be generated or obtained by the model management entity, or may be generated or obtained by the model training entity. For specific implementations corresponding to different scenarios, refer to the following descriptions in FIG. 3 to FIG. 7. Details are not described herein.

In a possible implementation, the correspondence information further indicates a correspondence between the data description information and model processing performed by using the inference model. The model processing may be at least one of the following processing: model training, model inference, model evaluation, or model test.

For a same inference model, data description information corresponding to different model processing may be the same or different. For example, a first inference model corresponds to 12 data fields. In a model training process, network data corresponding to all 12 data fields in the 12 data fields needs to be used. In a model inference process, network data corresponding to first 11 data fields in the 12 data fields needs to be used. Further, when the inference model is for model inference, a first network dataset returned by the data entity includes only the network data corresponding to the first 11 data fields, so that transmission overheads of data query in the model inference process can be reduced.

For example, the correspondence information may directly indicate the correspondence between the data description information and the model processing. For example, the correspondence information may include sequentially sorted data fields, and indicate a place of a data field corresponding to each type of model processing. Alternatively, the correspondence information indirectly indicates the correspondence between the data description information and the model processing. For example, the at least one data field is sent according to a preconfigured sorting rule, so that the data entity can determine a correspondence between the data field and a model processing type based on sorting of the data field and the sorting rule. A form of the correspondence information is not particularly limited in this application.

It should be noted that a correspondence between the model processing type and the data description information may also be preconfigured in the data entity. For example, the data entity may preconfigure that network data of a specific type is not used for a model processing type. S220. The model entity sends model information to the data entity. Correspondingly, the data entity receives the model information from the model entity.

The model information may indicate the data entity to return a network dataset corresponding to the data description information. Alternatively, the model entity sends a data query message to the data entity. The data query message includes the model information, and the data query message may be for requesting the data entity to return a network dataset.

It may be understood that the model information corresponds to information that is in the correspondence information and that is for identifying the inference model. For example, when the correspondence information indicates the mapping relationship between the identification information of the inference model and the data description information, the model information may include the identification information of the inference model; or when the correspondence information indicates the mapping relationship between the inference type of the inference model and the data description information, the model information may include the inference type of the inference model. In this way, the data entity can obtain, through indexing, the corresponding data description information in the correspondence information based on the model information.

In addition, when the data description information corresponds to the model processing type, the model entity may further indicate model processing performed by using the inference model to the data entity. That is, the method may further include step S230.

Optionally, in S230, the model entity sends model processing information to the data entity. Correspondingly, the data entity receives the model processing information from the model entity. The model processing information indicates that the inference model is for performing at least one of the following processing: model training, model inference, model evaluation, or model test. The model processing information and the model information may be carried in one or more messages, or one or more information elements of a same message. For example, the model processing information and the model information may be carried in the data query message that is for requesting the data entity to return the network dataset. Optionally, the data query message may further include characteristic information of the requested network dataset, for example, information about a time period corresponding to the network dataset.

S240. The data entity sends a first network dataset corresponding to the data description information to the model entity based on the model information and the correspondence information. Correspondingly, the model entity receives the first network dataset from the data entity.

The first network dataset is for performing model processing on the inference model.

The first network dataset may include network data corresponding to the data description information, so that the model entity can perform model processing on the inference model based on the network data.

The data entity may determine, based on the model information and the correspondence information, the data description information corresponding to the first network dataset requested by the model entity, or the data entity may determine, based on the model information, the model processing information, and the correspondence information, the data description information corresponding to the first network dataset requested by the model entity. Therefore, the data entity may request data from a network device based on the data description information; generate, from data obtained by a network device, the first network dataset corresponding to the data description information; generate, from data locally stored in the data entity, the first network dataset corresponding to the data description information; or obtain, from a network device, network data corresponding to a part of the data description information, and obtain, from locally stored data, network data corresponding to another part of the data description information. This is not particularly limited in this application.

In a possible implementation, the data entity may perform data processing on an original dataset obtained from the network device and/or local storage space, to generate the first network dataset. In this embodiment of this application, the original dataset may be referred to as a second network dataset.

A data processing method used by the data entity may be for making quality of the generated first network dataset higher than that of the second network dataset, and/or the data processing method may be for making a data amount of the generated first network dataset less than that of the second network dataset.

The following describes a possible data processing method. The data processing method may include at least one of the following: missing data processing, deduplication processing, filtering processing, combination processing, or quantization processing.

The missing data processing may refer to performing deletion processing on data having missing values or data having a proportion of missing values in total data greater than a specific threshold, and/or performing imputation processing on data having missing values or data having a proportion of missing values in total data greater than a specific threshold. The deletion processing may be simple deletion or weighted deletion. For example, a weight coefficient of deletion is determined based on an importance degree of data. The imputation processing may be mean imputation, imputation by using a same-class mean, maximum likelihood estimation imputation, multiple imputation, or the like. This is not particularly limited in this application.

The deduplication processing may refer to deleting duplicate data in the second network dataset. The filtering processing may refer to extracting required data through filtering in a manner such as a comparison operation, a range operation, null value matching, character matching, or logical matching. The combination processing may refer to combining data frames with a same structure in the second network dataset into one data frame. The quantization processing may refer to processing data in the second network dataset in a manner such as extremum removal, standardization, or neutralization.

The data entity may perform data processing on the second network dataset by using any one or a combination of the foregoing data processing methods. For example, data processing methods for network data corresponding to different data fields in the second network dataset may be the same or may be different. For example, combination processing is performed on network data corresponding to RSRP, and missing data processing is performed on a serving cell identifier. In addition, it may be understood that performing data processing on the second network dataset may include: separately performing one or more types of data processing on network data corresponding to one or more data fields, and performing one or more types of data processing on network data corresponding to a plurality of data fields as a whole. This is not particularly limited in this application.

The data processing method may be related to a data field. In other words, data processing methods corresponding to different data fields may be the same or different. Alternatively, the data processing method may be related to an inference model. In other words, data processing methods for a same data field corresponding to different inference models may be the same or different. In a possible implementation, the data entity may preconfigure the data processing method. For example, the data entity may preconfigure the data processing method and a data field list. In another possible implementation, the model entity may indicate the data processing method to the data entity. In this implementation, the method may further include step S250 before step S240. Optionally, in S250, the model entity sends data processing method information to the data entity. Correspondingly, the data entity receives the data processing method information from the model entity.

The data processing method information indicates the at least one data processing method. For descriptions of the data processing method, refer to the descriptions of step S240. Details are not described herein again.

In a possible implementation, the data processing method information and the correspondence information in step S210 may be combined into one piece of information. For example, the information includes a list of correspondences between the model information, the data description information, and the data processing method information. For example, an identifier of the inference model corresponds to the at least one data field, and the identifier of the inference model further corresponds to the at least one data processing method, or the data field further corresponds to the at least one data processing method.

In another possible implementation, the model entity may include the data processing method information in the data query message for requesting network data. Alternatively, the model entity may configure the data processing method information for the data entity before requesting network data. When requesting network data, the model entity may further determine, based on an actual requirement, whether the data processing method needs to be adjusted. If it is determined that the data processing method needs to be adjusted, adjusted data processing method information may be carried in the data query message. For example, the data processing method information includes an adjusted corresponding parameter. In this way, the data entity can perform data processing based on the adjusted data processing method information, thereby improving network data reliability.

In the foregoing descriptions, the correspondence information is configured for the data entity, so that the model entity can request the network dataset by sending the model information to the data entity, thereby reducing signaling overheads occupied for requesting the network dataset. Optionally, the data processing method information is configured for the data entity, so that the data entity can return a processed network dataset to the model entity based on the data processing method information, thereby reducing signaling overheads for returning the network dataset and/or improving quality of the returned network dataset. However, in a scenario in which the inference model corresponding to the correspondence information is not running temporarily, the model entity temporarily does not need to request, from the data entity, network data corresponding to the inference model, the correspondence information becomes invalid, or the like, the model entity may perform, on the data entity, de-configuration processing for the correspondence information. Similarly, the model entity may alternatively perform, on the data entity, de-configuration processing for the data processing method information. In this way, memory of the data entity can be saved. The following provides descriptions with reference to step S260 and step S270. Optionally, in S260, the model entity sends first request information to the data entity. Correspondingly, the data entity receives the first request information from the model entity. The first request information requests the data entity to delete information about the correspondence between the inference model and the data description information.

Therefore, the data entity can delete the information about the correspondence between the inference model and the data description information based on the first request information. Optionally, in S270, the model entity sends second request information to the data entity. Correspondingly, the data entity receives the second request information from the model entity. The second request information requests the data entity to delete information about the at least one data processing method.

Therefore, the data entity can delete the information about the at least one data processing method based on the second request information.

It may be understood that the first request information and the second request information may be two pieces of information that are separately sent, or may be combined into one piece of request information. That the data entity deletes the information about the correspondence and deletes the information about the data processing method may be separately deleting the two pieces of information, or may be deleting the combined information of the two pieces of information. This is not particularly limited in this application.

It may be further understood that, the model management entity may request to delete the information about the correspondence, but not delete the information about the data processing method, or may request to delete the information about the data processing method, but not delete the information about the correspondence. For example, the correspondence information indicates a correspondence between the identifier of the inference model and the data field. When the inference model is no longer running, the model entity may request to delete the correspondence. The data processing method indicated by the data processing method information corresponds to the data field, and the model entity may also need to request network data corresponding to the data field when running another inference model. In this case, the model entity may not request to delete the information about the data processing method, thereby reducing transmission overheads. Based on this technical solution, the data entity receives the correspondence information from the model entity, and learns of, based on the correspondence information, the correspondence between the inference model and the data description information, so that the data entity can obtain, through indexing based on the model information corresponding to the inference model and the correspondence information, the first network dataset corresponding to the data description information. In this way, each time the model entity needs to obtain a network dataset, the model entity can obtain the network dataset by sending the model information corresponding to the inference model to the data entity, to reduce transmission overheads.

In the method embodiment shown in FIG. 2, a function implemented by the model entity may be implemented by one or more of the model inference entity, the model training entity, the model management entity, or the model evaluation entity shown in FIG. 1, and a function implemented by the data entity may be implemented by the data management entity shown in FIG. 1. The following describes different implementations with reference to FIG. 3 to FIG. 7.

FIG. 3 is a schematic flowchart of a data transmission method in a model training process. Optionally, in S310, a model management entity sends a model deployment message to a model inference entity. Correspondingly, the model inference entity receives the model deployment message from the model management entity.

The model deployment message is for deploying an inference model. The model deployment message may carry at least one of the following information: an inference type of the inference model, identification information of the inference model, and a model address of the inference model. The inference type and the identification information may be for marking the inference model. The model management entity may obtain the inference type or the identification information from a model file of the inference model. The model management entity may alternatively obtain the inference type or the identification information of the inference model from another entity, for example, a model market, a model training entity, or an entity having a model training platform. In a possible implementation, the model management entity may alternatively obtain the inference type of the inference model from a model file or another entity, and allocate a model identifier to the inference model based on the inference type. The model address of the inference model is an address for storing the inference model, for example, a uniform resource locator (uniform resource locator, URL) or an internet protocol (internet protocol, IP) address. Optionally, the model management entity sends the model deployment message to the model training entity, so that the model training entity can learn that the inference model is deployed or is run, and the model training entity may also deploy a corresponding inference model for subsequent retraining of the inference model.

S320. The model management entity sends correspondence information to a data management entity. Correspondingly, the data management entity receives the correspondence information from the model management entity.

The correspondence information indicates a correspondence between the inference model and data description information. For descriptions of the correspondence information, refer to the descriptions of step S210. Details are not described herein again.

For example, the model management entity may send a hypertext transfer protocol (hypertext transfer protocol, HTTP) request message to the data management entity, where the HTTP request message carries the correspondence information. For example, the correspondence information may be carried in a URL in the HTTP request message, carried in a header field of the HTTP request message, or carried in a message body of the HTTP request message.

In a possible implementation, the model management entity may preconfigure the correspondence information. Alternatively, the model file of the inference model includes the correspondence information, and the model management entity may obtain the correspondence information from the model file. Alternatively, the model management entity preconfigures a correspondence between at least one inference type and a data field, and the model management entity determines, based on the inference type of the inference model, a data field corresponding to the inference model, to generate the correspondence information. Alternatively, the model management entity receives the correspondence information from another entity. A manner of generating, obtaining, or receiving the correspondence information by the model management entity is not particularly limited in this application.

Optionally, in S330, the model management entity sends data processing method information to the data management entity. Correspondingly, the data management entity receives the data processing method information from the model management entity.

The data processing method information indicates at least one data processing method. For descriptions of the data processing method information, refer to the descriptions of step S250. Details are not described herein again.

For example, the data processing method information may be carried in the HTTP request message. In a possible implementation, the model management entity may preconfigure the data processing method information. Alternatively, the model file of the inference model includes the data processing method information, and the model management entity may obtain the data processing method information from the model file. Alternatively, the model management entity receives the data processing method information from another entity. A manner of generating, obtaining, or receiving the data processing method information by the model management entity is not particularly limited in this application.

It may be understood that the data processing method information may be generated based on a data processing method used during initial training of the inference model. For example, the model training entity may determine a data processing method during training based on one or more pieces of information in the inference type of the inference model, a model structure, an available data distribution and data amount, and expert experience, and store the data processing method in the model file as description information of the inference model, so that the model management entity may obtain the data processing method from the model file. Alternatively, the model training entity indicates the data processing method to the model management entity. In addition, a method indicated by the data processing method information may be all or a part of data processing methods used during training. For example, the data management entity may select a method that can reduce a data amount to generate the data processing method information. This is not particularly limited in this application.

Optionally, in S340, the model management entity sends a notification message to the model training entity. Correspondingly, the model training entity receives the notification message from the model management entity.

The notification message may include the identification information of the inference model.

The notification message is for notifying the model training entity of the correspondence information configured by the data management entity, so that the model training entity learns that network data may be requested by sending model information to the data management entity.

The notification message may be further for notifying the model training entity of the data processing method information configured by the data management entity, so that the model training entity can learn of data processing operations that are performed on network data returned by the data management entity, and the model training entity can determine, based on the data processing operations completed by the data management entity, how to further process the returned network data. The model training entity may further determine whether the data processing method information configured by the data management entity can be adjusted. For example, the model training entity may adjust, based on a running status or a status of the network data returned by the data management entity, a manner of processing the network data by the data management entity.

Optionally, in S350, the model management entity, the model training entity, or the model inference entity determines to retrain the inference model.

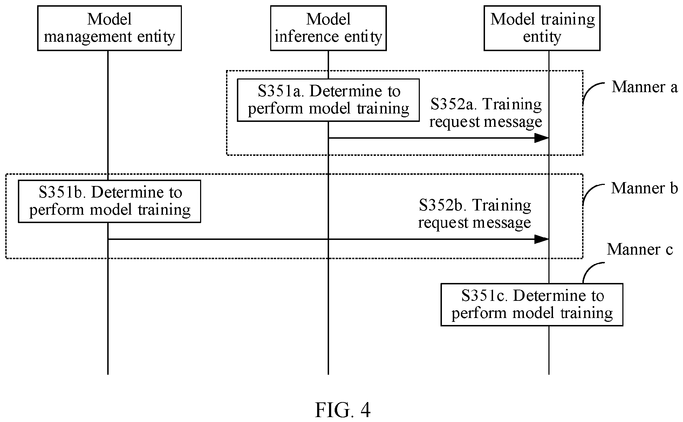

During a running process of the inference model, performance of the inference model may deteriorate gradually as data features change with time. To ensure reliable running of the inference model, the model management entity, the model training entity, or the model inference entity may initiate retraining of the inference model, to be specific, perform online training on the inference model for one or more times by using the network data. The following describes, with reference to FIG. 4, a possible manner of determining to retrain the inference model.

### Manner a:

The model inference entity may determine to retrain the inference model. This manner may be implemented by using steps S351a and S352a.

S351a. The model inference entity determines to perform model training on the inference model. For example, the model inference entity may determine, based on a running status of the inference model, to retrain the inference model. For example, the model inference entity may determine, based on a key performance indicator corresponding to the inference model, to retrain the inference model. For example, the model inference entity may monitor a key performance indicator of a network in real time, cyclically, periodically, or by triggering. When the key performance indicator reaches a condition, for example, is lower than or equal to a specific threshold within a specific period of time, the model inference entity determines to retrain the inference model.

For another example, the model inference entity may regularly determine to retrain the inference model. For example, the model inference entity may determine to retrain the inference model after running for a predetermined period of time. Alternatively, the model inference entity may cyclically trigger retraining of the inference model. For example, the model inference entity may determine, based on the inference type of the inference model, a cycle or time for retraining the inference model.

S352a. The model inference entity sends a training request message to the model training entity. Correspondingly, the model training entity receives the training request message from the model inference entity.

The training request message is for requesting the model training entity to train the inference model, and the training request message may include the identification information of the inference model.

### Manner b:

The model management entity may determine to train the inference model. This manner may be implemented by using steps S351b and S352b.

S351b. The model management entity determines to perform model training on the inference model.

A manner of determining, by the model management entity, to train the inference model may be similar to the manner of determining, by the model inference entity, to train the inference model. For descriptions thereof, refer to the descriptions of step S351a. Details are not described herein again.

S352b. The model management entity sends a training request message to the model training entity. Correspondingly, the model training entity receives the training request message from the model management entity.

The training request message is for requesting the model training entity to train the inference model, and the training request message may include the identification information of the inference model.

### Manner c:

The model training entity may determine to perform model training on the inference model. This manner may be implemented by using step S351c.

S351c. The model training entity determines to train the inference model.

A manner of determining, by the model training entity, to train the inference model may be similar to the manner of determining, by the model inference entity, to train the inference model. For descriptions thereof, refer to the descriptions of step S351a. Details are not described herein again. It should be noted that the inference model may be determined to be trained for a plurality of times, and step S350 may be performed for one or more times. For example, the model inference entity may perform step S351a once at intervals to determine whether to train the inference model. When determining to train the inference model, the model inference entity performs step S352a to request the model training entity to train the training model. That is, the model inference entity may perform steps S351a and S352a for a plurality of times. For another example, the model inference entity may perform step S351a once to determine to perform cyclic training on the inference model for a plurality of times, and may perform step S352a once to request the model training entity to perform cyclic training on the inference model for a plurality of times, or may cyclically perform step S352a for a plurality of times to request the model training entity to perform training on the inference model.

S360. The model training entity sends the model information to the data management entity. Correspondingly, the data management entity receives the model information from the model training entity.

The model information may indicate a data entity to return a network dataset corresponding to the data description information. Alternatively, the model entity sends a data query message to a data entity. The data query message includes the model information, and the data query message may be for requesting the data entity to return a network dataset. For content of the model information, refer to the descriptions of step S220. Details are not described herein again.

Optionally, if the model training entity determines to adjust the data processing method information configured by the data management entity, the data query message may further include adjusted data processing method information, or a parameter corresponding to the adjusted data processing method information. For example, a data processing method of the data management entity includes directly deleting rows with a missing value proportion exceeding a preset threshold, for example, 80%. When a data amount of network data received by the model training entity is excessively small, the data query message may include the adjusted data processing method information. For example, the preset threshold is adjusted to 90%.

Optionally, in S370, the model training entity sends model processing information to the data entity. Correspondingly, the data entity receives the model processing information from the model training entity.

The model processing information indicates that the inference model is for model training. For content of the model processing information, refer to the descriptions of step S230. Details are not described herein again.

S380. The data management entity sends a first network dataset corresponding to the data description information to the model training entity based on the model information and the correspondence information. Correspondingly, the model training entity receives the first network dataset from the data management entity.

The first network dataset is for performing model training on the inference model. For content of step S380, refer to the descriptions of step S240. Details are not described herein again.

S390. The model training entity performs model training on the inference model based on the first network dataset.

For example, the model training entity may train the inference model based on the first network dataset. Alternatively, the model training entity may perform data processing on the first network dataset, construct a training set, and train the inference model based on the training set.

It may be understood that when it is determined in step S350 that the inference model is trained for a plurality of times, correspondingly, step S360 to step S390 may also be performed for a plurality of times. It can be learned that in this embodiment of this application, the model training entity may request the network data from the data management entity by sending the model information, to avoid sending, to the data management entity for a plurality of times, a data field that occupies a large quantity of transmission overheads, thereby reducing transmission overheads. Optionally, in S3100, the model training entity sends a training complete notification message to the model management entity and/or the model inference entity. Correspondingly, the model management entity and/or the model inference entity receive/receives the training complete notification message from the model training entity.

The training complete notification message may notify the model management entity and/or the model inference entity that training of the inference model has been completed. The training complete notification message may carry the identification information of the inference model. Optionally, in S3110, the model management entity sends first request information to the data management entity. Correspondingly, the data management entity receives the first request information from the model management entity.

The first request information requests the data management entity to delete information about the correspondence between the inference model and the data description information.

For example, the model management entity may determine a running time period of the inference model by itself, or the model management entity may receive a notification of a model running status from the model inference entity, to send the first request information to the data management entity.

Optionally, in S3120, the model management entity sends second request information to the data management entity. Correspondingly, the data management entity receives the second request information from the model management entity.

The second request information requests the data entity to delete information about the at least one data processing method.

Based on this technical solution, the data management entity receives the correspondence information from the model management entity, and learns of, based on the correspondence information, the correspondence between the inference model and the data description information, so that the data management entity can obtain, through indexing based on the model information corresponding to the inference model and the correspondence information, the first network dataset corresponding to the data description information. **In** this way, when performing at least one time of model training on the inference model, the model training entity can obtain the network dataset by sending the model information corresponding to the inference model to the data management entity, to reduce transmission overheads.

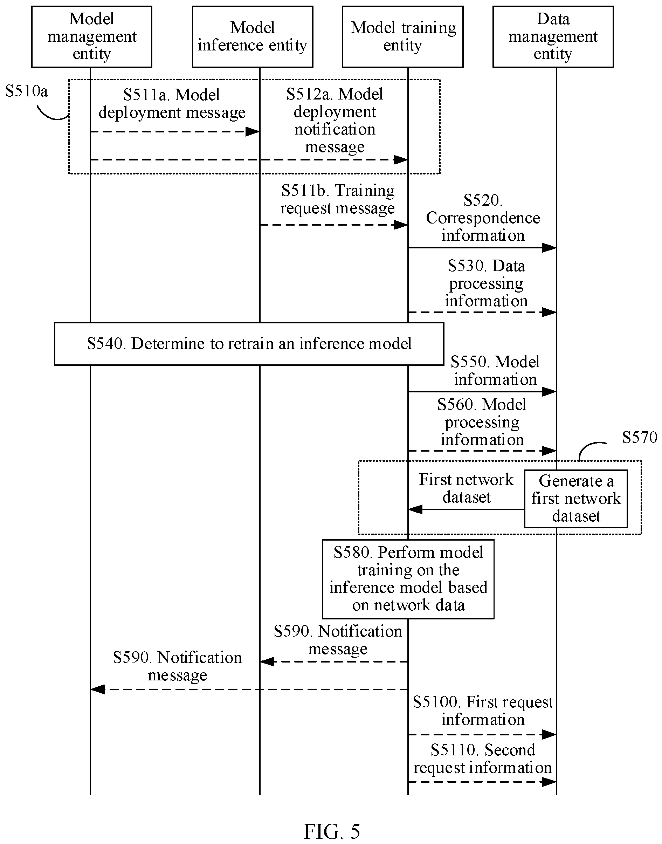

FIG. 5 is a schematic flowchart of another data transmission method in a model training process. Optionally, in S510, a model training entity obtains model information of an inference model. The model information may include a model identifier of the inference model, or may include identification information of the inference model, so that the model training entity learns that the inference model needs to be trained.

In a possible implementation, the model training entity obtains the model information from a model management entity. Step S510 may be implemented by steps S511a and S512a. Optionally, in S511a, a model management entity sends a model deployment message to a model inference entity. Correspondingly, the model inference entity receives the model deployment message from the model management entity.

The model deployment message is for deploying an inference model. For content of the model deployment message, refer to the descriptions of step S310. Details are not described herein again. Optionally, in S512a, the model management entity sends a model deployment notification message to the model training entity. Correspondingly, the model training entity receives the model deployment notification message from the model management entity.

The model deployment notification message is for notifying the model training entity that the inference model is deployed on or runs on the model inference entity, and the model deployment notification message includes the model information.

In another possible implementation, the model training entity obtains the model information from the model inference entity. Step S510 may be implemented by step S511b.

S511b. The model inference entity sends a training request message to the model training entity. Correspondingly, the model training entity receives the training request message from the model inference entity.

The training request message is for requesting the model training entity to train the inference model, and the training request message includes the model information.

Therefore, the model training entity learns, based on the model deployment notification message and/or the training request message, that the inference model has a model training requirement, and may configure correspondence information of the inference model for a data management entity.

S520. The model training entity sends the correspondence information to the data management entity. Correspondingly, the data management entity receives the correspondence information from the model training entity.

The correspondence information indicates a correspondence between the inference model and data description information. For descriptions of the correspondence information, refer to the descriptions of step S210. Details are not described herein again.

The model training entity may preconfigure the correspondence information. Alternatively, a model file of the inference model includes the correspondence information, and the model training entity may obtain the correspondence information from the model file. Alternatively, the model training entity preconfigures a correspondence between at least one inference type and a data field, and the model training entity determines, based on an inference type of the inference model, a data field corresponding to the inference model, to generate the correspondence information. Alternatively, the model training entity receives the correspondence information from another entity. Alternatively, the model training entity generates the correspondence information based on historical training data. A manner of generating, obtaining, or receiving the correspondence information by the model training entity is not particularly limited in this application.

In a possible implementation, the model training entity may send an information registration message to the data management entity, where the information registration message includes the correspondence information.

In another possible implementation, the model training entity may send the correspondence information to the data management entity when requesting a network dataset from the data management entity for the first time. For example, when initially training the inference model, the model training entity sends a data collection request message to the data management entity. The data collection request message carries the correspondence information. The data management entity returns, to the model training entity, a network dataset requested in the data collection request message, and stores the correspondence information in the message. The model training entity may perform initial training based on the network dataset. Optionally, the data training entity completes initial training on the inference model, and sends a training complete notification message to the model management entity and/or the model inference entity. The training complete notification message may include at least one of the following information: the identification information of the inference model, the inference type of the inference model, and a model address of the inference model. The training complete notification message is for notifying the model management entity and/or the model inference entity that the initial training of the inference model has been completed. Therefore, when subsequently needing to request network data of the inference model, the model management entity and/or the model inference entity may request the network data by sending the model information to the data management entity, thereby reducing signaling overheads.

Optionally, in S530, the model training entity sends data processing method information to the data management entity. Correspondingly, the data management entity receives the data processing method information from the model training entity.

The data processing method information indicates at least one data processing method. For descriptions of the data processing method information, refer to the descriptions of step S250. Details are not described herein again.

The model training entity may send a data processing configuration message to the data management entity, where the data processing configuration message includes the data processing method information, and the data processing configuration message is for requesting the data management entity to store the data processing method information.

In a possible implementation, the model training entity may send the data processing configuration message to the data management entity before performing the initial training on the inference model. For example, after receiving the model deployment notification message from the model management entity, the model training entity generates the data processing method information based on the model deployment notification message.

In another possible implementation, the model training entity may send the data processing configuration message to the data management entity after performing the initial training on the inference model. For example, after completing the initial training on the inference model, the model training entity may generate the data processing method information based on experience in an initial training process, so that data processing reliability can be improved.

Optionally, in S540, the model management entity, the model training entity, or the model inference entity determines to train the inference model.

For descriptions of determining to retrain the inference model, refer to the descriptions of step S350. Details are not described herein again.

S550. The model training entity sends the model information to the data management entity. Correspondingly, the data management entity receives the model information from the model training entity.

The model information may indicate the data management entity to return a network dataset corresponding to the data description information. Alternatively, the model entity sends a data query message to the data management entity. The data query message includes the model information, and the data query message may be for requesting the data management entity to return a network dataset. For content of the model information, refer to the descriptions of step S220 and step S360. Details are not described herein again.

S560. The model training entity sends model processing information to the data management entity. Correspondingly, the data management entity receives the model processing information from the model training entity.

The model processing information indicates that the inference model is for model training. For content of the model processing information, refer to the descriptions of step S230 and step S370. Details are not described herein again.

S570. The data management entity sends a first network dataset corresponding to the data description information to the model training entity based on the model information and the correspondence information. Correspondingly, the model training entity receives the first network dataset from the data management entity.

The first network dataset is for performing model training on the inference model. For content of step S570, refer to the descriptions of steps S240 and S380. Details are not described herein again. S580. The model training entity performs model training on the inference model based on the first network dataset.

For content of step S580, refer to the descriptions of step S390. Details are not described herein again.

Optionally, in S590, the model training entity sends a training complete notification message to the model inference entity and/or the model management entity. Correspondingly, the model inference entity and/or the model management entity receive/receives the training complete notification message from the model training entity.

The training complete notification message may notify the model inference entity and/or the model management entity that training of the inference model has been completed. The training complete notification message may carry the identification information of the inference model.

Optionally, in S5100, the model management entity sends first request information to the data management entity. Correspondingly, the data management entity receives the first request information from the model management entity.

The first request information requests the data management entity to delete information about the correspondence between the inference model and the data description information. For content of step S5100, refer to the descriptions of step S3110. Details are not described herein again. Optionally, in S5110, the model management entity sends second request information to the data management entity. Correspondingly, the data management entity receives the second request information from the model management entity.

The second request information requests the data management entity to delete information about the at least one data processing method. For content of step S5110, refer to the descriptions of step S3120. Details are not described herein again.

Based on this technical solution, the data management entity receives the correspondence information from the model training entity, and learns of, based on the correspondence information, the correspondence between the inference model and the data description information, so that the data management entity can obtain, through indexing based on the model information corresponding to the inference model and the correspondence information, the first network dataset corresponding to the data description information. In this way, when performing at least one time of model training on the inference model, the model training entity can obtain the network dataset by sending the model information corresponding to the inference model to the data management entity, to reduce transmission overheads.

In addition, the model training entity can generate the correspondence information according to expert experience of the model training entity, so that reliability of the correspondence information can be improved. In addition, the model training entity may further generate the data processing method information based on a data processing capability (for example, a computing capability and a storage capability) prior knowledge, and the like of the model training entity. In other words, the model training entity determines, based on various information, a data processing manner and/or a processing parameter corresponding to the data processing performed by the data management entity, thereby improving data processing reliability.

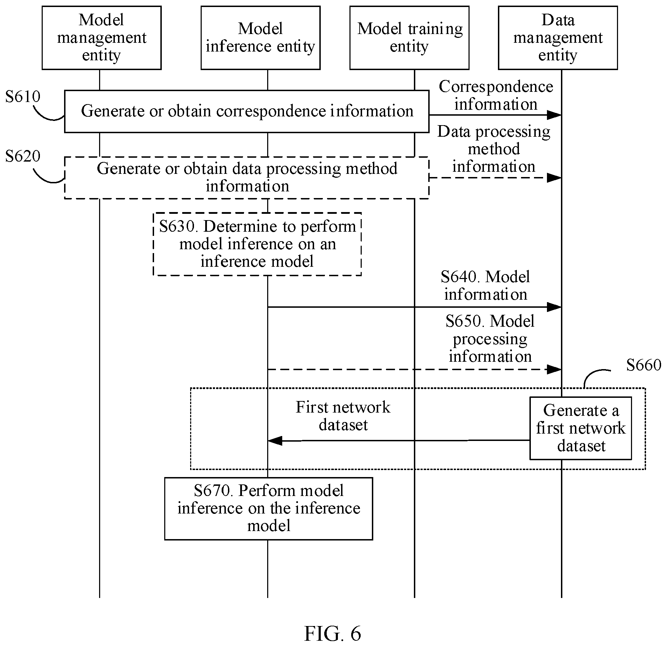

FIG. 6 is a schematic flowchart of a data transmission method in a model inference process according to an embodiment of this application.

S610. A model management entity or a model training entity generates or obtains correspondence information, and sends the correspondence information to a data management entity. Correspondingly, the data management entity receives the correspondence information.

The correspondence information indicates a correspondence between an inference model and data description information. For a manner in which the model management entity or the model training entity generates the correspondence information, refer to the descriptions of steps S210, S320, and S520. Details are not described herein again.

Optionally, in S620, the model management entity or the model training entity generates data processing method information, and sends the data processing method information to the data management entity. Correspondingly, the data management entity receives the data processing method information.

The data processing method information indicates at least one data processing method. For a manner in which the model management entity or the model training entity generates the data processing method information, refer to the descriptions of steps S250, S330, and S530. Details are not described herein again.

Optionally, in S630, a model inference entity determines to perform model inference on the inference model.

For example, the model management entity may send a model deployment message to the model inference entity, where the model deployment message is for deploying the inference model. The model deployment message may carry at least one of the following information: an inference type of the inference model, identification information of the inference model, and a model address of the inference model. Therefore, the model inference entity may determine, based on the model deployment message, to perform model inference on the inference model.

S640. The model inference entity sends model information to the data management entity. Correspondingly, the data management entity receives the model information from the model inference entity.

The model information may indicate the data management entity to return a network dataset of the data description information. Alternatively, the model inference entity sends a data query message to the data management entity. The data query message includes the model information, and the data query message may be for requesting the data management entity to return a network dataset. For content of the model information, refer to the descriptions of step S220 and step S360. Details are not described herein again.

S650. The model training entity sends model processing information to the data management entity. Correspondingly, the data management entity receives the model processing information from the model training entity.

The model processing information indicates that the inference model is for model inference. For content of the model processing information, refer to the descriptions of step S230 and step S370. Details are not described herein again.

S660. The data management entity sends a first network dataset corresponding to the data description information to the model inference entity based on the model information and the correspondence information. Correspondingly, the model inference entity receives the first network dataset from the data management entity.

The first network dataset is for performing model inference on the inference model. For content of step S660, refer to the descriptions of step S240. Details are not described herein again.

S670. The model inference entity performs model inference on the inference model.

The model inference entity performs model inference on the inference model by using network data included in the first network dataset.

It may be understood that, after performing the model inference, the model inference entity may further send first request information to the data management entity, to request the data management entity to delete information about the correspondence between the inference model and the data description information, and/or send second request information, to request the data management entity to delete information about the at least one data processing method. Alternatively, the model inference entity may send a notification message to another entity, for example, the model management entity, where the notification message is for notifying that running of the inference model ends, so that the model management entity can send first request information and/or second request information to the data management entity. For descriptions of the first request information, refer to the descriptions of step S260 in FIG. 2. For descriptions of the second request information, refer to the descriptions of step S270. Details are not described herein.

Based on this technical solution, the data management entity receives the correspondence information from the model training entity or the model management entity, and learns of, based on the correspondence information, the correspondence between the inference model and the data description information, so that the data management entity can obtain, through indexing based on the model information corresponding to the inference model and the correspondence information, the first network dataset corresponding to the data description information. In this way, when performing model inference on the inference model, the model inference entity can obtain the network dataset by sending the model information corresponding to the inference model to the data management entity, to reduce transmission overheads.

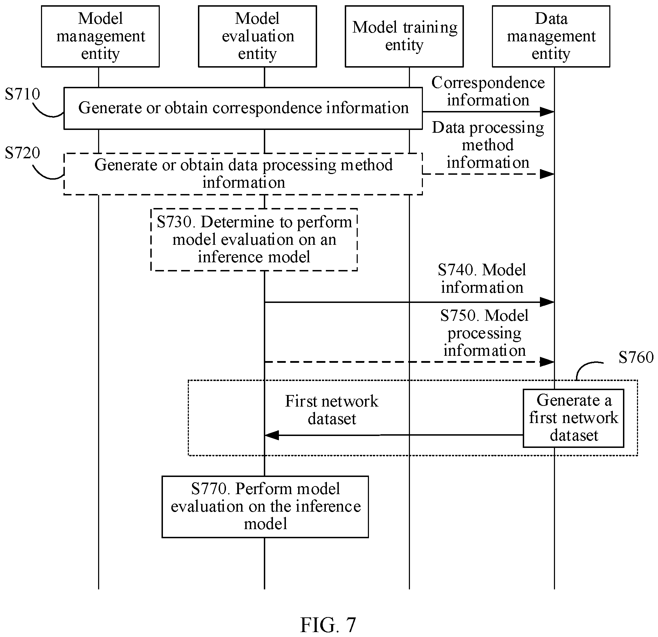

FIG. 7 is a schematic flowchart of a data transmission method in a model evaluation process according to an embodiment of this application.

S710. A model management entity or a model training entity generates or obtains correspondence information, and sends the correspondence information to a data management entity. Correspondingly, the data management entity receives the correspondence information.

The correspondence information indicates a correspondence between an inference model and data description information. For a manner in which the model management entity or the model training entity generates or obtains the correspondence information, refer to the descriptions of steps S210, S320, and S520. Details are not described herein again.

S720. The model management entity or the model training entity generates or obtains data processing method information, and sends the data processing method information to the data management entity. Correspondingly, the data management entity receives the data processing method information.

The data processing method information indicates at least one data processing method. For a manner in which the model management entity or the model training entity generates the data processing method information, refer to the descriptions of steps S250, S330, and S530. Details are not described herein again.

S730. The model evaluation entity determines to perform model evaluation on the inference model. For example, the model evaluation entity may cyclically or periodically perform model evaluation on the inference model through preconfiguration, or the model inference entity may send an evaluation request message to the model evaluation entity, where the evaluation request message is for requesting the model evaluation entity to evaluate the inference model. Therefore, the model evaluation entity may request network data to test the inference model, to determine whether performance of the inference model can run reliably or whether the inference model needs to be retrained.

S740. The model evaluation entity sends model information to the data management entity. Correspondingly, the data management entity receives the model information from the model evaluation entity.

The model information may indicate the data management entity to return a network dataset of the data description information. Alternatively, the model evaluation entity sends a data query message to the data management entity. The data query message includes the model information, and the data query message may be for requesting the data management entity to return a network dataset. For content of the model information, refer to the descriptions of step S220. Details are not described herein again.

S750. The model evaluation entity sends model processing information to the data management entity. Correspondingly, the data management entity receives the model processing information from the model evaluation entity.

The model processing information indicates that the inference model is for model evaluation. For content of the model processing information, refer to the descriptions of step S230. Details are not described herein again.

S760. The data management entity sends a first network dataset corresponding to the data description information to the model evaluation entity based on the model information and the correspondence information. Correspondingly, the model evaluation entity receives the first network dataset from the data management entity.

The first network dataset is for performing model evaluation on the inference model. For content of step S760, refer to the descriptions of step S240. Details are not described herein again.

S770. The model evaluation entity performs model evaluation on the inference model.

The model evaluation entity performs model evaluation on the inference model by using network data included in the first network dataset.

It may be understood that, after performing the evaluation, the model evaluation entity may further send first request information to the data management entity, to request the data management entity to delete information about the correspondence between the inference model and the data description information, and/or send second request information, to request the data management entity to delete information about the at least one data processing method. Alternatively, the model evaluation entity may send a notification message to another entity, for example, the model management entity, where the notification message is for notifying that evaluation of the inference model ends, so that the model management entity can send first request information and/or second request information to the data management entity. For descriptions of the first request information, refer to the descriptions of step S260 in FIG. 2. For descriptions of the second request information, refer to the descriptions of step S270. Details are not described herein.

Based on this technical solution, the data management entity receives the correspondence information from the model training entity or the model management entity, and learns of, based on the correspondence information, the correspondence between the inference model and the data description information, so that the data management entity can obtain, through indexing based on the model information corresponding to the inference model and the correspondence information, the first network dataset corresponding to the data description information. In this way, when performing model evaluation on the inference model, the model evaluation entity can obtain the network dataset by sending the model information corresponding to the inference model to the data management entity, to reduce transmission overheads.

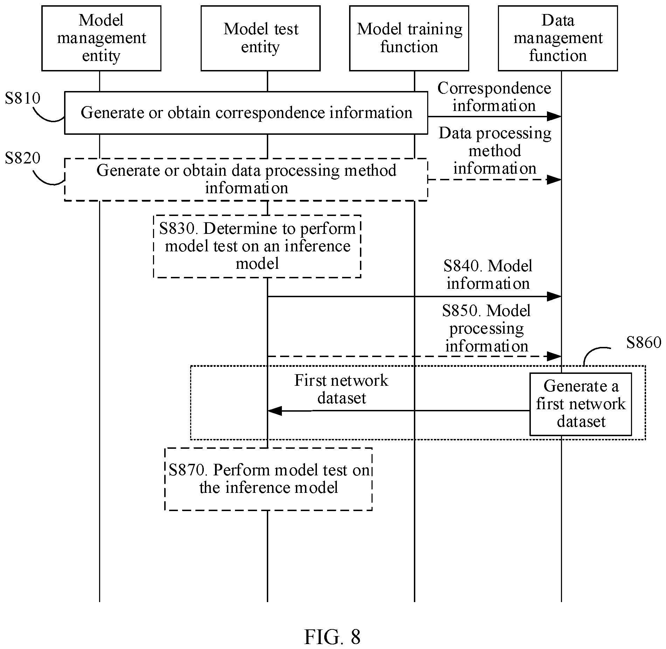

FIG. 8 is a schematic flowchart of a data transmission method in a model test process according to an embodiment of this application.

S810. A model management entity or a model training entity generates or obtains correspondence information, and sends the correspondence information to a data management entity. Correspondingly, the data management entity receives the correspondence information.

The correspondence information indicates a correspondence between the inference model and data description information. For a manner in which the model management entity or the model training entity generates or obtains the correspondence information, refer to the descriptions of steps S210, S320, and S520. Details are not described herein again.

S820. The model management entity or the model training entity generates or obtains data processing method information, and sends the data processing method information to the data management entity. Correspondingly, the data management entity receives the data processing method information.

The data processing method information indicates at least one data processing method. For a manner in which the model management entity or the model training entity generates or obtains the data processing method information, refer to the descriptions of steps S250, S330, and S530. Details are not described herein again.

S830. A model test entity determines to perform model test on the inference model.

The model test entity may be an independent entity configured to perform model test, or the model test entity is a functional module in another model entity, for example, the model training entity or the model management entity. This is not particularly limited in this application.

For example, the model test entity may cyclically or periodically perform the model test on the inference model through preconfiguration, the model management entity may send a test request message to the model test entity before sending the model deployment message, the model inference entity may send a test request message to the model test entity before running the inference model, or the model training entity may send a test request message to the model test entity after completing model training on the inference model. The test request message is for requesting the model test entity to test the inference model. Therefore, the model test entity may request network data to test the inference model, to determine whether performance of the inference model meets an expectation.

S840. The model test entity sends model information to the data management entity. Correspondingly, the data management entity receives the model information from the model test entity.

The model information may indicate the data management entity to return a network dataset of the data description information. Alternatively, the model test entity sends a data query message to the data management entity. The data query message includes the model information, and the data query message may be for requesting the data management entity to return a network dataset. For content of the model information, refer to the descriptions of step S220. Details are not described herein again.

S850. The model test entity sends model processing information to the data management entity. Correspondingly, the data management entity receives the model processing information from the model test entity.

The model processing information indicates that the inference model is for model test. For content of the model processing information, refer to the descriptions of step S230. Details are not described herein again.

S860. The data management entity sends a first network dataset corresponding to the data description information to the model test entity based on the model information and the correspondence information. Correspondingly, the model test entity receives the first network dataset from the data management entity.

The first network dataset is for performing model test on the inference model. For content of step S860, refer to the descriptions of step S240. Details are not described herein again.

S870. The model test entity performs model testing on the inference model.

The model test entity performs model test on the inference model by using network data included in the first network dataset.

It may be understood that, after testing the inference model, the model test entity may further send first request information to the data management entity, to request the data management entity to delete information about the correspondence between the inference model and the data description information, and/or send second request information, to request the data management entity to delete information about the at least one data processing method. Alternatively, the model test entity may send a notification message to another entity, for example, the model management entity, where the notification message is for notifying that testing of the inference model ends, so that the model management entity can send first request information and/or second request information to the data management entity. For descriptions of the first request information, refer to the descriptions of step S260 in FIG. 2. For descriptions of the second request information, refer to the descriptions of step S270. Details are not described herein.

Based on this technical solution, the data management entity receives the correspondence information from the model training entity or the model management entity, and learns of, based on the correspondence information, the correspondence between the inference model and the data description information, so that the data management entity can obtain, through indexing based on the model information corresponding to the inference model and the correspondence information, the first network dataset corresponding to the data description information. In this way, when performing model test on the inference model, the model test entity can obtain the network dataset by sending the model information corresponding to the inference model to the data management entity, to reduce transmission overheads.

In the embodiments provided in FIG. 2 to FIG. 8, the data management entity receives the correspondence information from the model training entity or the model management entity, and learns of the correspondence between the inference model and the data description information based on the correspondence information. Therefore, in each model inference process, for example, in a model processing process in which network data needs to be requested, such as model inference, model training, model evaluation, or model test, the corresponding model entity may obtain the network dataset by sending the model information corresponding to the inference model to the data management entity. Therefore, transmission overheads in a direction in which the model entity sends information to the data management entity can be reduced. This application further provides a data transmission method. A model entity may provide a data processing method for a data entity, so that the data entity can perform data processing on network data requested by the model entity and then return the network data, so that quality of the returned network data is improved and/or a data amount is reduced.

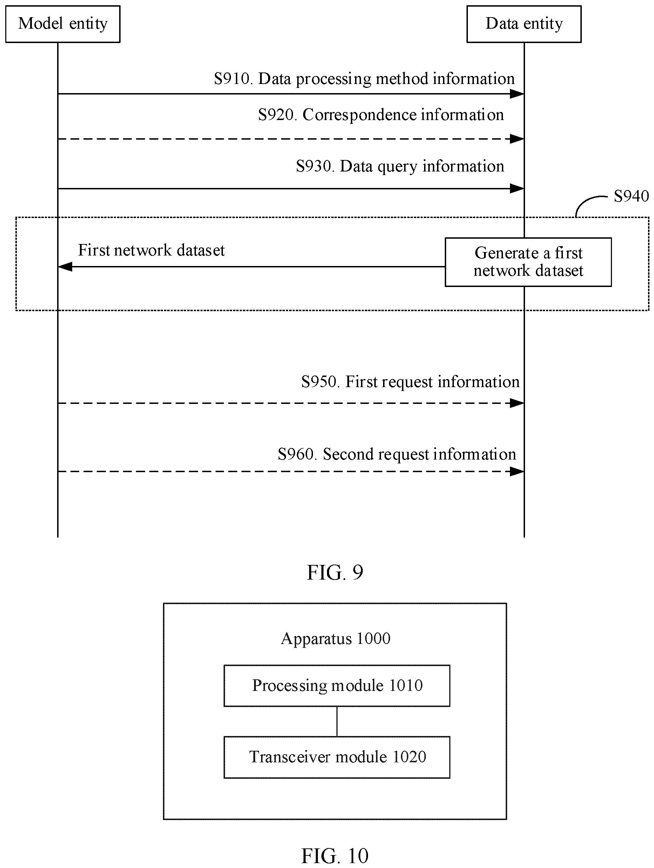

FIG. 9 is a schematic flowchart of a data transmission method 900 according to an embodiment of this application.

S910. A model entity sends data processing method information to a data entity. Correspondingly, the data entity receives the data processing method information from the model entity.

The data processing method information indicates at least one data processing method.

A function implemented by the model entity may be implemented by one or more of the model inference entity, the model training entity, the model management entity, or the model evaluation entity shown in FIG. 1, and a function implemented by the data entity may be implemented by the data management entity shown in FIG. 1.

For example, the data processing method information is generated or obtained by the model management entity. For example, the model management entity may preconfigure the data processing method information. Alternatively, a model file of an inference model includes the data processing method information, and the model management entity may obtain the data processing method information from the model file. Alternatively, the model management entity receives the data processing method information from another entity. A manner of generating, obtaining, or receiving the correspondence information by the model management entity is not particularly limited in this application.

For another example, the data processing method information is generated or obtained by the model training entity. For example, the model training entity may preconfigure the data processing method information. Alternatively, a model file of an inference model includes the data processing method information, and the model training entity may obtain the data processing method information from the model file. Alternatively, the model training entity receives the data processing method information from another entity. Alternatively, the model training entity generates the data processing method information based on expert experience or historical training data of the model training entity. Alternatively, the model training entity generates the data processing method information based on a feature of a network dataset returned by the data entity previously. A manner of generating, obtaining, or receiving the data processing method information by the model management entity is not particularly limited in this application.

For descriptions of the data processing method information, refer to the descriptions of step S230 in FIG. 2, step S330 in FIG. 3, and step S530 in FIG. 5. Details are not described herein again. Optionally, in S920, the model entity sends correspondence information to the data entity. Correspondingly, the data entity receives the correspondence information from the model entity. The correspondence information indicates a correspondence between the inference model and data description information.

The correspondence information may be generated or obtained by the model management entity or the model training entity. For descriptions of the correspondence information, refer to the descriptions of step S210 in FIG. 2, step S310 in FIG. 3, and step S510 in FIG. 5. Details are not described herein again.

S930. The model entity sends data query information to the data entity. Correspondingly, the data entity receives the data query information from the model entity.

The data query information is for requesting a network dataset corresponding to the inference model.

For example, the data query information may include data description information corresponding to the requested network dataset. For example, the data description information may be at least one data field.

For another example, when the data entity receives the correspondence information from the model entity, the data query information may include the model information, so that the data entity may obtain requested network data through indexing based on the model information and the correspondence information. For descriptions of the model information, refer to the descriptions of step S220 in FIG. 2, step S360 in FIG. 3, step S550 in FIG. 5, step S640 in FIG. 6, step S740 in FIG. 7, and step S840 in FIG. 8. Details are not described herein again.

In other words, the data entity may request network data in each model inference process, for example, a process of model inference, model training, model evaluation, or model test.

In a possible implementation, the data query information further includes model processing information, where the model processing information indicates that the inference model is for performing at least one of the following model processing: model training, model inference, model evaluation, or model test. For descriptions of the model processing information, refer to the descriptions of step S230 in FIG. 2, step S370 in FIG. 3, step S530 in FIG. 5, step S650 in FIG. 6, step S750 in FIG. 7, and step S850 in FIG. 8. Details are not described herein again.

S940. The data entity obtains a second network dataset based on the data query information, performs data processing on the second network dataset based on the data processing method information to generate a first network dataset, and sends the first network dataset to the model entity. Correspondingly, the model entity receives the first network dataset from the data entity. The data entity may obtain the second network dataset based on the data description information in the data query information, or the data entity may obtain the second network dataset based on the model information in the data query information, and perform data processing on the second network dataset in a manner indicated in the data processing method information, to generate the first network dataset. For a related data processing manner, refer to the descriptions of step S240 in FIG. 2, step S380 in FIG. 3, and step S570 in FIG. 5. Details are not described herein again. Optionally, in S950, the model entity sends first request information to the data entity. Correspondingly, the data entity receives the first request information from the model entity. The first request information requests the data entity to delete the correspondence information. Therefore, the data entity may delete the correspondence information based on the first request information.

Optionally, in S960, the model entity sends second request information to the data entity. Correspondingly, the data entity receives the second request information from the model entity. The second request information requests the data entity to delete the data processing method information.

Therefore, the data entity can delete the data processing method information based on the second request information.

For descriptions of the first request information and the second request information, refer to the descriptions of step S260 and step S270 in FIG. 2. Details are not described herein again.

Therefore, the data processing performed by the data entity based on the data processing method information may be for making quality of the generated first network dataset higher than that of the second network dataset, and/or the data processing may be for making a data amount of the generated first network dataset less than that of the second network dataset, thereby improving network data quality and/or reducing interface overheads.

It may be understood that FIG. 9 may also use an implementation similar to that in FIG. 3 to FIG.

8. Details are not described herein again.

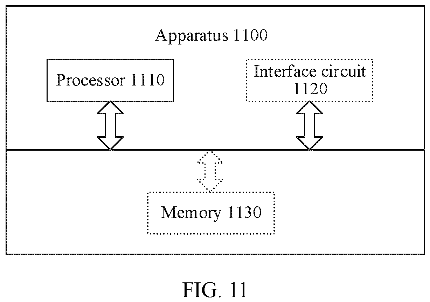

FIG. 10 and FIG. 11 are schematics of structures of possible communication apparatuses according to embodiments of this application. These communication apparatuses may be configured to implement functions of the model entity and the model management entity in the foregoing method embodiments, and therefore can also implement beneficial effects of the foregoing method embodiments. In embodiments of this application, the communication apparatus may be a model entity or a model management entity, or may be a module (for example, a chip) used in the model entity or the model management entity.

As shown in FIG. 10, a communication apparatus 1000 includes a processing module 1010 and a transceiver module 1020. The communication apparatus 1000 is configured to implement a function of the model entity in the method embodiments shown in FIG. 2 to FIG. 8. Alternatively, the communication apparatus 1000 may include a module configured to implement any function or operation of the model entity in the method embodiments shown in FIG. 2 to FIG. 8, and the module may be all or partially implemented by using software, hardware, firmware, or any combination thereof.

When the communication apparatus 1000 is configured to implement a function of the data entity in the method embodiments shown in FIG. 2 to FIG. 8: The transceiver module 1020 is configured to receive correspondence information from a model entity, where the correspondence information indicates a correspondence between an inference model and data description information. The transceiver module 1020 is further configured to receive, from the model entity, model information corresponding to the inference model. The processing module is configured to send a first network dataset corresponding to the data description information to the model entity based on the model information and the correspondence information, where the first network dataset is for performing model processing on the inference model.

Based on this technical solution, the communication apparatus receives the correspondence information from the model entity, and learns of, based on the correspondence information, the correspondence between the inference model and the data description information, so that the data entity can obtain, through indexing based on the model information corresponding to the inference model and the correspondence information, the first network dataset corresponding to the data description information. In this way, each time the model entity needs to obtain a network dataset, the model entity can obtain the network dataset by sending the model information corresponding to the inference model to the data entity, to reduce transmission overheads.

For more detailed descriptions of the processing module 1010 and the transceiver module 1020, directly refer to related descriptions in the method embodiments shown in FIG. 2 to FIG. 8. Details are not described herein again.

When the communication apparatus 1000 is configured to implement a function of the model entity in the method embodiments shown in FIG. 2 to FIG. 8: The processing module 1010 is configured to generate or obtain correspondence information, where the correspondence information indicates a correspondence between an inference model and data description information. The transceiver module is configured to send the correspondence information to a data entity. The transceiver module 1020 is further configured to send model information corresponding to the inference model to the data entity. The transceiver module 1020 is further configured to receive, from the data entity, a first network dataset corresponding to the data description information, where the first network dataset is for performing model processing on the inference model.

Based on this technical solution, the data entity receives the correspondence information from the communication apparatus, and learns of, based on the correspondence information, the correspondence between the inference model and the data description information, so that the data entity can obtain, through indexing based on the model information corresponding to the inference model and the correspondence information, the first network dataset corresponding to the data description information. In this way, each time the model entity needs to obtain a network dataset, the model entity can obtain the network dataset by sending the model information corresponding to the inference model to the data entity, to reduce transmission overheads.

For more detailed descriptions of the processing module 1010 and the transceiver module 1020, directly refer to related descriptions in the method embodiments shown in FIG. 2 to FIG. 8. Details are not described herein again.

When the communication apparatus 1000 is configured to implement a function of the data entity in the method embodiment shown in FIG. 9: The transceiver module 1020 receives data processing method information from a model entity, where the data processing method information indicates at least one data processing method. The transceiver module 1020 is further configured to receive data query information from the model entity, where the data query information is for requesting a network dataset corresponding to an inference model. The processing module 1010 is configured to: obtain a second network dataset based on the data query information, and perform data processing on the second network dataset based on the data processing method information, to generate a first network dataset. The transceiver module 1020 is further configured to send the first network dataset to the model entity.

Based on this technical solution, the communication apparatus can obtain the second network dataset based on the data query information, perform data processing on the second network dataset, and then return the second network dataset to the model entity, so that network data quality can be improved and/or interface overheads can be reduced.

For more detailed descriptions of the processing module 1010 and the transceiver module 1020, directly refer to related descriptions in the method embodiment shown in FIG. 9. Details are not described herein again.

When the communication apparatus 1000 is configured to implement a function of the model entity in the method embodiment shown in FIG. 9: The processing module 1010 is configured to generate or obtain data processing method information, where the data processing method information indicates at least one data processing method. The transceiver module 1020 sends the data processing method information to a data entity. The transceiver module 1020 is further configured to send data query information to the data entity, where the data query information is for requesting a network dataset corresponding to an inference model. The transceiver module 1020 is further configured to receive a first network dataset from the data entity in response to the data query information, where the first network dataset is generated based on the data processing method information.

Based on this technical solution, the data entity can obtain the first network dataset based on the data query information, perform data processing on the first network dataset, and then return the second network dataset to the communication apparatus, so that network data quality can be improved and/or interface overheads can be reduced.

For more detailed descriptions of the processing module 1010 and the transceiver module 1020, directly refer to related descriptions in the method embodiment shown in FIG. 9. Details are not described herein again.

As shown in FIG. 11, a communication apparatus 1100 includes a processor 1110 and an interface circuit 1120. The processor 1110 and the interface circuit 1120 are coupled to each other. It may be understood that the interface circuit 1120 may be a transceiver or an input/output interface. Optionally, the communication apparatus 1100 may further include a memory 1130, configured to store instructions to be executed by the processor 1110, input data required by the processor 1110 to run instructions, or data generated after the processor 1110 runs instructions.

When the communication apparatus 1100 is used in the methods in FIG. 2 to FIG. 9, the processor 1110 is configured to implement a function of the processing module 1010, and the interface circuit 1120 is configured to implement a function of the transceiver module 1020.

When the communication apparatus 1100 is configured to implement the methods shown in FIG. 2 to FIG. 9, the communication apparatus 1100 includes a processor 1110 and an interface circuit 1120. The processor 1110 and the interface circuit 1120 are coupled to each other. It may be understood that the interface circuit 1120 may be a transceiver or an input/output interface. Optionally, the communication apparatus 1100 may further include a memory 1130, configured to store instructions to be executed by the processor 1110, input data required by the processor 1110 to run instructions, or data generated after the processor 1110 runs instructions.

When the communication apparatus 1100 is used in the methods shown in FIG. 2 to FIG. 9, the processor 1110 is configured to implement a function of the processing module 1010, and the interface circuit 1120 is configured to implement a function of the transceiver module 1020. When the communication apparatus is a chip used in a model entity, the chip of the model entity implements functions of the model entity in the foregoing method embodiments. The chip of the model entity receives information from another module (for example, a radio frequency module or an antenna) in the model entity, where the information is sent by a data entity to the model entity; or the chip of the model entity sends information to another module (for example, a radio frequency module or an antenna) in the model entity, where the information is sent by the model entity to a data entity.

When the communication apparatus is a chip used in a data entity, the chip of the data entity implements functions of the data entity in the foregoing method embodiments. The chip of the data entity receives information from another module (for example, a radio frequency module or an antenna) in the data entity, where the information is sent by a model entity to the data entity; or another module (for example, a radio frequency module or an antenna) in the data entity sends information to the chip, where the information is sent by the data entity to a model entity.

It may be understood that the processor in embodiments of this application may be a central processing unit (Central Processing Unit, CPU), may be another general-purpose processor, a digital signal processor (Digital Signal Processor, DSP), an application-specific integrated circuit (Application Specific Integrated Circuit, ASIC), a field programmable gate array (Field Programmable Gate Array, FPGA), or another programmable logical device, a transistor logical device, a hardware component, or any combination thereof. The general-purpose processor may be a microprocessor or any regular processor or the like.

The memory in embodiments of this application may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or any other form of storage medium well known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or a part of the foregoing embodiments may be implemented by using software, hardware, firmware, or any combination thereof. When software is used to implement embodiments, all or a part of the embodiments may be implemented in a form of a computer program product. The computer program product includes one or more computer programs or instructions. When the computer programs or instructions are loaded and executed on a computer, the procedures or functions in embodiments of this application are all or partially performed. The computer may be a general-purpose computer, a dedicated computer, a computer network, a network device, a terminal device, or another programmable apparatus. The computer programs or the instructions may be stored in a computer-readable storage medium, or may be transmitted through the computer-readable storage medium. The computer-readable storage medium may be any usable medium accessible by the computer, or a data storage device, for example, a server, integrating one or more usable media. The usable medium may be a magnetic medium, for example, a floppy disk, a hard disk, or a magnetic tape; may be an optical medium, for example, a DVD; or may be a semiconductor medium, for example, a solid-state drive (solid-state drive, SSD).

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be understood that in embodiments of this application, numbers "first", "second", ... are merely used to distinguish between different objects, for example, to distinguish between different network devices, and constitute no limitation on the scope of embodiments of this application. Embodiments of this application are not limited thereto.

It should be further understood that, in this application, both "when" and "if" mean that an entity performs corresponding processing in an objective case, are not intended to limit time, and do not require a determining action during implementation of the entity, or do not mean that there is another limitation.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

It should also be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be further understood that, in various embodiments of this application, the "indication" may include a direct indication and an indirect indication, or may include an explicit indication and an implicit indication. Information indicated by a piece of information (for example, the foregoing correspondence information) is referred to as to-be-indicated information. In a specific implementation process, there are a plurality of manners of indicating the to-be-indicated information, for example, but not limited to, the following manners: The to-be-indicated information is directly indicated, for example, the to-be-indicated information or an index of the to-be-indicated information is indicated. Alternatively, the to-be-indicated information may be indirectly indicated by indicating other information, where there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. It should be further understood that in various embodiments of this application, "preconfiguration" may be implemented by pre-storing corresponding code or a corresponding table in a device (for example, a data entity), or in another manner that may indicate related information. A specific implementation of the "preconfiguration" is not limited in this application.

Unless otherwise specified, an expression in this application similar to an expression that "an item includes one or more of the following: A, B, and C" usually means that the item may be any one of the following cases: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A data transmission method, wherein the method comprises:
receiving, by a data entity, correspondence information from a model entity, wherein the correspondence information indicates a correspondence between an inference model and data description information;
receiving, by the data entity from the model entity, model information corresponding to the inference model; and
sending, by the data entity, a first network dataset corresponding to the data description information to the model entity based on the model information and the correspondence information, wherein the first network dataset is for performing model processing on the inference model.

2. The method according to claim 1, wherein the model information comprises at least one of the following information: identification information of the inference model and an inference type of the inference model.

3. The method according to claim 1 or 2, wherein the data description information comprises at least one data field, and the first network dataset comprises network data corresponding to the at least one data field.

4. The method according to any one of claims 1 to 3, wherein the method further comprises:
obtaining, by the data entity, a second network dataset based on the model information and the correspondence information; and
performing, by the data entity, data processing on the second network dataset, to generate the first network dataset.

5. The method according to claim 4, wherein the method further comprises:
receiving, by the data entity, data processing method information from the model entity, wherein the data processing method information indicates at least one data processing method, and the at least one data processing method is for performing data processing on a network dataset; and
the performing, by the data entity, data processing on the second network dataset comprises:
performing, by the data entity, data processing on the second network dataset by using one or more of the at least one data processing method.

6. The method according to claim 4 or 5, wherein the at least one data processing method comprises at least one of the following: missing data processing, deduplication processing, filtering processing, combination processing, or quantization processing.

7. The method according to any one of claims 1 to 6, wherein the method further comprises:
receiving, by the data entity, model processing information from the model entity, wherein the model processing information indicates that the inference model is for performing at least one of the following model processing: model training, model inference, model evaluation, or model test; and
the sending, by the data entity, a first network dataset to the model entity based on the model information and the correspondence information comprises:
sending, by the data entity, the first network dataset to the model entity based on the model information, the correspondence information, and the model processing information.

8. The method according to any one of claims 1 to 7, wherein the correspondence information further indicates a correspondence between the data description information and the model processing performed by using the inference model.

9. The method according to any one of claims 1 to 8, wherein the method further comprises:
receiving, by the data entity, first request information from the model entity, wherein the first request information requests the data entity to delete information about the correspondence between the inference model and the data description information.

10. The method according to any one of claims 5 to 9, wherein the method further comprises:
receiving, by the data entity, second request information from the model entity, wherein the second request information requests the data entity to delete information about the at least one data processing method.

11. A data transmission method, wherein the method comprises:
generating or obtaining, by a model entity, correspondence information, wherein the correspondence information indicates a correspondence between an inference model and data description information;
sending, by the model entity, the correspondence information to a data entity;
sending, by the model entity, model information corresponding to the inference model to the data entity; and
receiving, by the model entity from the data entity, a first network dataset corresponding to the data description information, wherein the first network dataset is for performing model processing on the inference model.

12. The method according to claim 11, wherein the model information comprises at least one of the following information: identification information of the inference model and an inference type of the inference model.

13. The method according to claim 11 or 12, wherein the data description information comprises at least one data field, and the first network dataset comprises network data corresponding to the at least one data field.

14. The method according to claim 12 or 13, wherein the method further comprises:
sending, by the model entity, data processing method information to the data entity, wherein the data processing method information indicates at least one data processing method, and the at least one data processing method is for performing data processing on a network dataset.

15. The method according to claim 14, wherein the at least one data processing method comprises at least one of the following: missing data processing, deduplication processing, filtering processing, combination processing, or quantization processing.

16. The method according to any one of claims 11 to 15, wherein the method further comprises:
sending, by the model entity, model processing information to the data entity, wherein the model processing information indicates that the inference model is for performing at least one of the following model processing: model training, model inference, model evaluation, or model test.

17. The method according to any one of claims 11 to 16, wherein the correspondence information further indicates a correspondence between the data description information and the model processing performed by using the inference model.

18. The method according to any one of claims 11 to 17, wherein the method further comprises:
sending, by the model entity, first request information to the data entity, wherein the first request information requests the data entity to delete information about the correspondence between the inference model and the data description information.

19. The method according to any one of claims 14 to 18, wherein the method further comprises:
sending, by the model entity, second request information to the data entity, wherein the second request information requests to delete information about the at least one data processing method.

20. A data transmission method, comprising:
generating or obtaining, by a model entity, correspondence information, wherein the correspondence information indicates a correspondence between an inference model and data description information;
sending, by the model entity, the correspondence information to a data entity, and receiving, by the data entity, the correspondence information from the model entity;
sending, by the model entity, model information corresponding to the inference model to the data entity, and receiving, by the data entity from the model entity, the model information corresponding to the inference model; and
sending, by the data entity, a first network dataset corresponding to the data description information to the model entity based on the model information and the correspondence information, and receiving, by the model entity from the data entity, the first network dataset corresponding to the data description information, wherein the first network dataset is for performing model processing on the inference model.

21. The method according to claim 20, wherein the model information comprises at least one of the following information: identification information of the inference model and an inference type of the inference model.

22. The method according to claim 20 or 21, wherein the data description information comprises at least one data field, and the first network dataset comprises network data corresponding to the at least one data field.

23. The method according to any one of claims 20 to 22, wherein the method further comprises:
obtaining, by the data entity, a second network dataset based on the model information and the correspondence information; and
performing, by the data entity, data processing on the second network dataset, to generate the first network dataset.

24. The method according to claim 23, wherein the method further comprises:
sending, by the model entity, data processing method information to the data entity, and receiving, by the data entity, the data processing method information from the model entity, wherein the data processing method information indicates at least one data processing method, and the at least one data processing method is for performing data processing on a network dataset; and
the performing, by the data entity, data processing on the second network dataset comprises:
performing, by the data entity, data processing on the second network dataset by using one or more of the at least one data processing method.

25. The method according to claim 23 or 24, wherein the at least one data processing method comprises at least one of the following: missing data processing, deduplication processing, filtering processing, combination processing, or quantization processing.

26. The method according to any one of claims 20 to 25, wherein the method further comprises:
sending, by the model entity, model processing information to the data entity, and receiving, by the data entity, the model processing information from the model entity, wherein the model processing information indicates that the inference model is for performing at least one of the following model processing: model training, model inference, model evaluation, or model test; and
the sending, by the data entity, a first network dataset to the model entity based on the model information and the correspondence information comprises:
sending, by the data entity, the first network dataset to the model entity based on the model information, the correspondence information, and the model processing information.

27. The method according to any one of claims 20 to 26, wherein the correspondence information further indicates a correspondence between the data description information and the model processing performed by using the inference model.

28. The method according to any one of claims 20 to 27, wherein the method further comprises:
sending, by the model entity, first request information to the data entity, and receiving, by the data entity, the first request information from the model entity, wherein the first request information requests the data entity to delete information about the correspondence between the inference model and the data description information.

29. The method according to any one of claims 24 to 28, wherein the method further comprises:
sending, by the model entity, second request information to the data entity, and receiving, by the data entity, the second request information from the model entity, wherein the second request information requests the data entity to delete information about the at least one data processing method.

30. A data transmission apparatus, comprising:
a transceiver module, configured to receive correspondence information from a model entity, wherein the correspondence information indicates a correspondence between an inference model and data description information, wherein
the transceiver module is further configured to receive, from the model entity, model information corresponding to the inference model; and
a processing module, configured to send a first network dataset corresponding to the data description information to the model entity based on the model information and the correspondence information, wherein the first network dataset is for performing model processing on the inference model.

31. The apparatus according to claim 30, wherein the model information comprises at least one of the following information: identification information of the inference model and an inference type of the inference model.

32. The apparatus according to claim 30 or 31, wherein the data description information comprises at least one data field, and the first network dataset comprises network data corresponding to the at least one data field.

33. The apparatus according to any one of claims 30 to 32, wherein
the processing module is further configured to obtain a second network dataset based on the model information and the correspondence information; and
the processing module is further configured to perform data processing on the second network dataset, to generate the first network dataset.

34. The apparatus according to claim 33, wherein
the transceiver module is further configured to receive data processing method information from the model entity, wherein the data processing method information indicates at least one data processing method, and the at least one data processing method is for performing data processing on a network dataset; and
the processing module is configured to perform data processing on the second network dataset by using one or more of the at least one data processing method.

35. The apparatus according to claim 33 or 34, wherein the at least one data processing method comprises at least one of the following: missing data processing, deduplication processing, filtering processing, combination processing, or quantization processing.

36. The apparatus according to any one of claims 30 to 35, wherein
the transceiver module is further configured to receive model processing information from the model entity, wherein the model processing information indicates that the inference model is for performing at least one of the following model processing: model training, model inference, model evaluation, or model test; and
the processing module is configured to send the first network dataset to the model entity based on the model information, the correspondence information, and the model processing information.

37. The apparatus according to any one of claims 30 to 36, wherein the correspondence information further indicates a correspondence between the data description information and the model processing performed by using the inference model.

38. The apparatus according to any one of claims 30 to 37, wherein
the transceiver module is further configured to receive first request information from the model entity, wherein the first request information requests the apparatus to delete information about the correspondence between the inference model and the data description information.

39. The apparatus according to any one of claims 36 to 38, wherein
the transceiver module is further configured to receive second request information from the model entity, wherein the second request information requests the apparatus to delete information about the at least one data processing method.

40. A data transmission apparatus, comprising:
a processing module, configured to generate or obtain correspondence information, wherein the correspondence information indicates a correspondence between an inference model and data description information; and
a transceiver module, configured to send the correspondence information to a data entity, wherein
the transceiver module is further configured to send model information corresponding to the inference model to the data entity; and
the transceiver module is further configured to receive, from the data entity, a first network dataset corresponding to the data description information, wherein the first network dataset is for performing model processing on the inference model.

41. The apparatus according to claim 40, wherein the model information comprises at least one of the following information: identification information of the inference model and an inference type of the inference model.

42. The apparatus according to claim 40 or 41, wherein the data description information comprises at least one data field, and the first network dataset comprises network data corresponding to the at least one data field.

43. The apparatus according to any one of claims 40 to 42, wherein
the transceiver module is further configured to send data processing method information to the data entity, wherein the data processing method information indicates at least one data processing method, and the at least one data processing method is for performing data processing on a network dataset.

44. The apparatus according to claim 43, wherein the at least one data processing method comprises at least one of the following: missing data processing, deduplication processing, filtering processing, combination processing, or quantization processing.

45. The apparatus according to any one of claims 40 to 44, wherein
the transceiver module is further configured to send model processing information to the data entity, wherein the model processing information indicates that the inference model is for performing at least one of the following model processing: model training, model inference, model evaluation, or model test.

46. The apparatus according to any one of claims 40 to 45, wherein the correspondence information further indicates a correspondence between the data description information and the model processing performed by using the inference model.

47. The apparatus according to any one of claims 40 to 46, wherein
the transceiver module is further configured to send first request information to the data entity, wherein the first request information requests the data entity to delete information about the correspondence between the inference model and the data description information.

48. The apparatus according to any one of claims 45 to 47, wherein
the transceiver module is further configured to send second request information to the data entity, wherein the second request information requests to delete information about the at least one data processing method.

49. A communication apparatus, comprising at least one processor, wherein the at least one processor is configured to execute a computer program stored in a memory, so that the apparatus implements the method according to any one of claims 1 to 10 or claims 11 to 19.

50. A computer-readable storage medium, comprising a computer program, wherein when the computer program is run on a computer, the computer is enabled to perform the method according to any one of claims 1 to 10 or claims 11 to 19.

51. A communication system for data transmission, comprising the communication apparatus according to any one of claims 30 to 39 and the communication apparatus according to any one of claims 40 to 48.

52. A computer program product, comprising computer program code, wherein when the computer program code is run on a computer, the computer is enabled to implement the method according to any one of claims 1 to 10 or the method according to any one of claims 11 to 19.

53. A communication apparatus, comprising a processor, configured to execute a computer program stored in a memory, so that the apparatus performs the method according to any one of claims 1 to 10 or the method according to any one of claims 11 to 19.

54. The apparatus according to claim 53, wherein the apparatus further comprises the memory.
